# FASCICULE DE BREVET EUROPEEN

(11) **EP 3 100 655 B1**
(45) Date de publication et mention de la délivrance du brevet: **21.03.2018**
(21) Numéro de dépôt: 16171008.2
(22) Date de dépôt: 24.05.2016
(51) Int. Cl.: A47J 27/08

(54) **AUTOCUISEUR À BAIONNETTE POURVU D'ÉLÉMENTS DE GUIDAGE**
SCHNELLKOCHTOPF MIT BAJONETTVERSCHLUSS, DER MIT FÜHRUNGSELEMENTEN AUSGESTATTET IST
BAYONET PRESSURE COOKER PROVIDED WITH GUIDE ELEMENTS

(30) Priorité: 02.06.2015 FR 1555001
(43) Date de publication de la demande: 07.12.2016
(73) Titulaire: SEB S.A., 69130 Ecully (FR)
(72) Inventeur: CHAMEROY, Eric, 21260 VERONNES (FR); BARAILLE, Eric, Laurent, 21121 FONTAINE LES DIJON (FR); RHETAT, Eric, 21000 DIJON (FR)
(74) Mandataire: Weber, Jean-François

(56) Documents cités:
- WO-A1-01/43605
- BR-A- 8 601 076
- CN-B- 102 349 791
- CN-U- 201 624 512
- CN-U- 203 000 535
- US-A- 2 600 703

## Description

La présente invention se rapporte au domaine technique général des appareils de cuisson d'aliments sous pression, et en particulier aux appareils domestiques du genre autocuiseurs destinés à former une enceinte de cuisson capable de monter en pression afin d'assurer la cuisson sous pression de vapeur des aliments contenus en son sein.

La présente invention concerne plus particulièrement un appareil de cuisson d'aliments sous pression comportant une cuve, un couvercle, ainsi qu'un système de verrouillage à baïonnette comprenant des première et deuxième séries d'excroissances de verrouillage solidaires respectivement du couvercle et de la cuve.

Les appareils de cuisson d'aliments sous pression, en particulier à usage domestique, sont bien connus. Ils comprennent généralement une cuve métallique sur laquelle est destiné à être rapporté de manière étanche, par l'intermédiaire d'une garniture souple d'étanchéité annulaire, un couvercle lui aussi métallique, de manière à constituer une enceinte de cuisson capable de monter en pression. Le couvercle est destiné à être lié à la cuve par l'intermédiaire de moyens de verrouillage permettant à l'autocuiseur d'évoluer entre une configuration de verrouillage du couvercle relativement à la cuve, dans laquelle l'enceinte de cuisson est capable de monter en pression, et une configuration de déverrouillage dans laquelle le couvercle peut être librement séparé de la cuve. Il existe différents types de moyens de verrouillage bien connus dans l'art antérieur. L'un des systèmes les plus répandus est le système de verrouillage à baïonnette, qui repose sur la mise en oeuvre de rampes de cuve et de couvercle destinées à venir en appui mutuel glissant après rotation du couvercle pour assurer ainsi une liaison mécanique de retenue empêchant la séparation de la cuve et du couvercle sous l'effet de la montée en pression. Les rampes de couvercle sont classiquement réalisées par repliement localisé vers l'intérieur du bord tombant annulaire du couvercle, tandis que les rampes de cuve sont quant à elles obtenues par repliement et découpe du bord supérieur libre de la cuve.

Un tel système de verrouillage à baïonnette donne globalement satisfaction, notamment en raison de son poids relativement faible, de sa simplicité de fabrication et de sa fiabilité. Il présente toutefois également certains inconvénients significatifs, notamment en matière de praticité et d'ergonomie. Tout d'abord, le principe même du verrouillage à baïonnette nécessite que l'utilisateur rapporte le couvercle sur la cuve selon un agencement spécifique précis permettant aux rampes de couvercle de passer à travers les découpes ménagées dans le bord supérieur de la cuve pour se retrouver en deçà des rampes de cuve, dans une position d'attente de verrouillage, à partir de laquelle l'utilisateur pourra ensuite amener les rampes de couvercle et de cuve en correspondance de verrouillage, par rotation du couvercle sur la cuve. Il s'avère en pratique souvent peu commode et peu ergonomique de positionner le couvercle sur la cuve selon l'agencement spécifique précis susvisé. En outre, une fois le couvercle en position d'attente de verrouillage, l'utilisateur doit ensuite exercer sur le couvercle un effort de mise en rotation significatif selon un sens prédéterminé, qui n'est pas forcément intuitif, couplée éventuellement à une pression du couvercle vers le bas. Une telle gestuelle de verrouillage est non seulement peu intuitive et malaisée, mais requiert en outre une certaine force physique, en raison notamment des frottements au niveau de la garniture d'étanchéité interposée entre le couvercle et la cuve. En pratique, le verrouillage d'un autocuiseur à baïonnette nécessite donc de rapporter correctement le couvercle sur la cuve, ce qui nécessite fréquemment plusieurs tentatives, puis de saisir l'autocuiseur à deux mains, de façon à immobiliser avec une main la cuve et à exercer avec l'autre main un effort de mise en rotation du couvercle relativement à la cuve tout en exerçant une pression vers le bas sur le couvercle, jusqu'à atteindre la configuration de verrouillage. De ce point de vue, les autocuiseurs à baïonnette s'avèrent généralement beaucoup moins faciles et pratiques à utiliser que les autocuiseurs à mâchoires par exemple, ces derniers étant toutefois beaucoup plus lourds que les autocuiseurs à baïonnette, et d'un coût de fabrication généralement plus élevé.

Le document CN-201 624 512 U décrit un autocuiseur électrique qui comporte une cuve ainsi qu'un couvercle relié à la cuve par une charnière et destiné à être verrouillé relativement à la cuve au moyen d'un système de type baïonnette.

L'invention se propose par conséquent de remédier aux différents inconvénients exposés précédemment et de proposer un nouvel appareil de cuisson d'aliments sous pression qui soit particulièrement léger, sûr, rapide et peu coûteux à fabriquer, tout en étant particulièrement pratique et ergonomique.

Un autre objet de l'invention vise à proposer un nouvel appareil de cuisson d'aliments sous pression très facile à utiliser, et en particulier aisément utilisable à l'aide d'une seule main.

Un autre objet de l'invention vise à proposer un nouvel appareil de cuisson d'aliments sous pression dont le verrouillage peut être commandé de façon particulièrement simple et fiable.

Un autre objet de l'invention vise à proposer un nouvel appareil de cuisson d'aliments sous pression qui présente une capacité élevée à suggérer de manière naturelle et intuitive sa propre utilisation.

Un autre objet de l'invention vise à proposer un nouvel appareil de cuisson d'aliments sous pression qui procure un haut niveau de sécurité d'utilisation.

Un autre objet de l'invention vise à proposer un nouvel appareil de cuisson d'aliments sous pression dont la conception rend totalement inutile une éventuelle immobilisation manuelle de la cuve par l'utilisateur lorsque ce dernier commande le verrouillage du couvercle relativement à la cuve.

Un autre objet de l'invention vise à proposer un nouvel appareil de cuisson d'aliments sous pression qui met en oeuvre un mécanisme de commande du verrouillage particulièrement robuste et compact.

Un autre objet de l'invention vise à proposer un nouvel appareil de cuisson d'aliments sous pression dont la conception permet de minimiser l'effort manuel exercé par un utilisateur pour commander le verrouillage.

Un autre objet de l'invention vise à proposer un nouvel appareil de cuisson d'aliments sous pression dont le mécanisme de commande du verrouillage est particulièrement simple, léger et fiable.

Un autre objet de l'invention vise à proposer un nouvel appareil de cuisson d'aliments sous pression pourvue d'un organe de commande qui permet à la fois de commander le verrouillage et le déverrouillage de façon particulièrement intuitive.

Un autre objet de l'invention vise à proposer un nouvel appareil de cuisson d'aliments sous pression qui est facile et pratique à ranger et à laver en lave-vaisselle.

Un autre objet de l'invention vise à proposer un nouvel appareil de cuisson d'aliments sous pression qui limite considérablement le risque de voir un utilisateur soulever l'ensemble de l'appareil par le couvercle.

Un autre objet de l'invention vise à proposer un nouvel appareil de cuisson d'aliments sous pression dont la conception limite le risque de voir le couvercle échapper à la prise de l'utilisateur.

Les objets assignés à l'invention sont atteints à l'aide d'un appareil de cuisson d'aliments sous pression comportant une cuve, un couvercle, ainsi qu'un système de verrouillage à baïonnette comprenant des première et deuxième séries d'excroissances de verrouillage solidaires respectivement du couvercle et de la cuve, ledit appareil comprenant un sous-ensemble de couvercle qui inclut ledit couvercle ainsi qu'un support attaché audit couvercle de façon que ce dernier puisse pivoter relativement audit support, lesdits sous-ensemble de couvercle et cuve étant conçus pour pouvoir être associés selon au moins un premier agencement conformément auquel le couvercle surmonte la cuve de sorte que ladite première série d'excroissances se trouve sensiblement plus haut que ladite deuxième série d'excroissances et un deuxième agencement obtenu à partir dudit premier agencement par un déplacement descendant dudit sous-ensemble de couvercle jusqu'à ce que ladite première série d'excroissances se retrouve sensiblement plus bas que ladite deuxième série d'excroissances, lesdits support et cuve étant en outre respectivement pourvus de premier et deuxième éléments de guidage complémentaires conçus pour collaborer dès que lesdits sous-ensemble de couvercle et cuve sont associés selon ledit premier agencement afin de guider ledit sous-ensemble de couvercle dans son déplacement descendant.

D'autres particularités et avantages de l'invention apparaîtront et ressortiront plus en détails à la lecture de la description faite ci-après, en référence aux dessins annexés, donnés à titre d'exemples purement illustratifs et non limitatifs, dans lesquels :
- La figure 1 illustre, selon une vue en perspective schématique, un appareil de cuisson d'aliments sous pression à verrouillage à baïonnette conforme à l'invention, dont le sous-ensemble de couvercle et la cuve sont associés selon le deuxième agencement, correspondant à une configuration de pré-verrouillage de l'appareil.
- La figure 2 illustre, selon une vue schématique en respective de dessus, la cuve de l'autocuiseur de la figure 1, ladite cuve étant munie de deux poignées latérales permettant sa manipulation.
- La figure 3 est une vue de dessus de l'autocuiseur de la figure 1.
- La figure 4 représente le sous-ensemble de couvercle de l'appareil des figures 1 et 3, ledit sous-ensemble de couvercle se trouvant dans une configuration de déverrouillage, prêt à venir coiffer la cuve de la figure 2 pour réaliser le deuxième agencement.
- La figure 5 représente l'autocuiseur des figures 1 à 4, le support n'étant pas représenté afin de permettre la visualisation d'un dispositif de transformation du déplacement manuel de l'organe de commande (dont est en l'espèce équipé l'appareil) en pivotement du couvercle relativement au support.
- La figure 6 illustre, selon une vue schématique en perspective, une pièce en matière plastique formant le support omis dans la figure 5.
- La figure 7 illustre, selon une vue schématique en perspective, un détail de conception de l'autocuiseur des figures 1 à 6, permettant en particulier de visualiser la coopération du support et de la poignée de cuve pour verrouiller le positionnement angulaire relatif, dans un plan horizontal, du couvercle et de la cuve (non représentés) lorsque le sous-ensemble de couvercle et la cuve sont associés selon le deuxième agencement.
- La figure 8 illustre, selon une vue de dessous, le détail de conception de la figure 7, à la différence près que la poignée de cuve a été omise.
- La figure 9 illustre, selon une vue schématique en perspective, un détail de réalisation de l'autocuiseur des figures 1 à 8, concernant plus précisément l'organe de commande du verrouillage/déverrouillage et le dispositif de transformation du déplacement de l'organe de commande en pivotement du couvercle relativement au support, dont est équipé en l'espèce l'appareil.
- La figure 10 illustre, selon une vue en coupe, un détail de la cuve de la figure 2.
- La figure 11 illustre, selon une vue partielle en perspective, l'appareil des figures précédentes, dont le sous-ensemble de couvercle et la cuve sont cette fois associés selon le premier agencement, correspondant à une configuration de pré-accostage de l'appareil.
- La figure 12 est une vue de côté partielle en perspective de l'appareil de la figure 11.
- La figure 13 est une vue en coupe d'un détail de réalisation de l'appareil des figures 11 et 12.
- La figure 14 illustre, selon une vue latérale partielle en perspective, l'appareil de la figure 1, dont le sous-ensemble de couvercle et la cuve sont associés selon le deuxième agencement, correspondant à une configuration de pré-verrouillage de l'appareil.
- La figure 15 est une vue en coupe d'un détail de réalisation de l'appareil des figures 1 et 14.
- La figure 16 illustre, selon une vue schématique en perspective, l'appareil des figures précédentes, avec cette fois le sous-ensemble de couvercle en configuration de verrouillage, de sorte que le couvercle est verrouillé relativement à la cuve, l'organe de commande étant rabaissé vers le couvercle dans une position rétractée correspondant au verrouillage.
- La figure 17 illustre, selon une vue de dessus, l'autocuiseur de la figure 16.
- Les figures 18 à 20 sont des vues analogues respectivement à celles des figures 5, 8 et 9 et 10, à la différence près que le sous-ensemble de couvercle est en configuration de verrouillage, de sorte que le couvercle est verrouillé relativement à la cuve, l'organe de commande étant rabaissé vers le couvercle dans une position rétractée correspondant au verrouillage.
- La figure 21 est une vue de dessus d'un détail du mécanisme de commande équipant l'appareil des figures précédentes, ledit mécanisme se trouvant dans un état correspondant au verrouillage du couvercle relativement à la cuve.

Comme illustré aux figures, l'invention concerne un appareil de cuisson 1 d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semi-professionnels. L'appareil 1 conforme à l'invention est conçu pour monter en pression exclusivement sous l'effet d'une source de chauffe (embarquée ou externe), sans apport de pression externe. L'appareil 1 de cuisson d'aliments sous pression est ainsi avantageusement conçu pour être soumis à une source de chauffe externe, comme par exemple une plaque de cuisson (à induction, électrique ou au gaz) et constitue donc un autocuiseur dépourvu de moyen de chauffe embarqué et destiné préférentiellement à être disposé sur une plaque de cuisson indépendante pour en chauffer le contenu. L'appareil de cuisson 1 conforme à l'invention comporte au moins une cuve 2 formant récipient de cuisson, destiné à accueillir les aliments à cuire et présentant en l'espèce sensiblement une symétrie de révolution selon un axe vertical central X-X', lequel s'étend selon une direction qui s'apparente à la direction verticale lorsque l'appareil 1 est en fonctionnement normal, c'est-à-dire repose sur un plan horizontal. La cuve 2 comprend un fond 2A, ainsi qu'une paroi latérale annulaire 2B qui s'élève entre ledit fond 2A et un bord supérieur libre 2C, lequel est en l'espèce de forme circulaire et délimite une ouverture d'accès à l'intérieur de la cuve 2. La conformation de ce bord supérieur libre 2C sera décrite plus en détails dans ce qui suit, en relation avec les moyens de verrouillage de l'appareil 1. Comme illustré aux figures, la cuve 2 est avantageusement munie d'au moins une poignée 2D, 2E qui est fixée à ladite cuve 2, de façon à faire saillie extérieurement de cette dernière. Comme illustré aux figures, ladite poignée 2D fait saillie de l'appareil 1 dont la cuve 2 forme localement l'enveloppe extérieure, de façon qu'un utilisateur puisse manipuler la cuve 2, et même l'appareil 1, au moyen de ladite poignée 2D. Dans le mode de réalisation illustré aux figures, ladite poignée 2D est monté sur la face externe de la paroi latérale 2B de la cuve 2, de façon à s'étendre radialement vers l'extérieur de la cuve 2 et à former ainsi une prise destinée à être attrapée manuellement par l'utilisateur pour manipuler la cuve 2 (par exemple pour la soulever et la déplacer). Dans le mode de réalisation illustré aux figures, l'appareil de cuisson 1 comprend deux poignées identiques 2D, 2E fixées sur la paroi latérale 2B de la cuve 2 de façon diamétralement opposée par rapport à l'axe central X-X', lesdites poignées 2D, 2E étant en l'espèce disposées à proximité du bord supérieur libre 2C de la cuve 2. Il est toutefois parfaitement envisageable que la cuve 2 ne soit munie que d'une seule poignée de cuve, ou de plus de deux poignées de cuve (par exemple trois ou quatre), sans pour autant que l'on sorte du cadre de l'invention.

L'appareil 1 conforme à l'invention comprend également un couvercle 3 destiné à être associé à la cuve 2 et verrouillé relativement à cette dernière pour former une enceinte de cuisson apte à monter en pression, c'est-à-dire une enceinte de cuisson suffisamment hermétique pour permettre la montée en pression de l'appareil 1. Afin d'obtenir ce caractère hermétique, étanche, l'appareil 1 inclut avantageusement une garniture d'étanchéité (non illustrée), formée de préférence par un joint annulaire souple, en élastomère par exemple, destinée à être interposée entre le couvercle 3 et la cuve 2, pour empêcher ainsi toute fuite incontrôlée de vapeur et/ou d'air entre l'intérieur de l'enceinte et l'extérieur. Le couvercle 3 est indépendant de la cuve 2, c'est-à-dire qu'il n'est pas attaché ou relié à cette dernière de façon permanente (ce qui signifie en particulier que le couvercle 3 et la cuve 2 ne sont pas reliés par une charnière ou une autre liaison mécanique). Le couvercle 3 peut donc être librement manipulé et déplacé par un utilisateur, indépendamment de la cuve 2. Le couvercle 3 présente avantageusement une forme conjuguée à celle de la cuve 2, par exemple une forme globalement discoïde, qui s'étend avantageusement dans un plan moyen sensiblement parallèle au plan moyen d'extension du fond 2A de la cuve 2 (c'est-à-dire un plan sensiblement horizontal en l'espèce) lorsqu'il est rapporté et verrouillé sur cette dernière. Dans le mode de réalisation illustré aux figures, le couvercle 3 inclut un élément de couverture discoïde 3A de forme et dimensions conjuguées à celles de l'ouverture d'accès délimitée par le bord supérieur libre 2C de la paroi latérale annulaire 2B de la cuve 2. Dans ce mode de réalisation, le couvercle 3 inclut également avantageusement une ceinture annulaire 3B, par exemple de forme sensiblement cylindrique ou tronconique, qui s'élève entre un premier bord annulaire 30B solidaire de l'élément de couverture discoïde 3A (en l'espèce au niveau de la périphérie de ce dernier) et un second bord annulaire libre 31B, lequel est par exemple lui-même prolongé par une collerette terminale. Comme illustré aux figures, l'élément de couverture discoïde 3A s'étend globalement selon un plan moyen horizontal, c'est-à-dire en l'espèce parallèle au plan moyen d'extension du fond 2A de la cuve 2 lorsque le couvercle 3 est associé à la cuve 2 pour former l'enceinte de cuisson, tandis que la ceinture annulaire 3B s'étend sensiblement verticalement, c'est-à-dire parallèlement à l'axe central X-X', la collerette terminale s'étendant quant à elle sensiblement horizontalement. Cela n'exclut bien entendu aucunement que l'élément de couverture discoïde 3A puisse être, tel qu'illustré aux figures, légèrement bombé ou incurvé localement, par exemple pour accueillir un mécanisme de commande. Dans le mode de réalisation illustré aux figures, la ceinture annulaire 3B est formée par un bord tombant annulaire qui s'étend vers le bas à partir de la périphérie de l'élément de couverture discoïde 3A. Dans ce mode de réalisation, le couvercle 3 est destiné à venir coiffer de façon sensiblement ajustée le sommet de la cuve 2 pour former l'enceinte de cuisson, de sorte que la ceinture annulaire 3B entoure par l'extérieur le sommet de la paroi latérale annulaire 2B et le bord supérieur libre 2C, tandis que l'élément de couverture discoïde 3A repose en appui sur le bord libre 2C, par l'intermédiaire du joint d'étanchéité interposé entre la cuve 2 et le couvercle 3. Il est cependant parfaitement envisageable que la ceinture annulaire 3B soit alternativement destinée à être insérée au sein de la cuve 2, de façon à être entourée par, et contenue dans, la cuve 2, sans pour autant que l'on sorte du cadre de l'invention.

L'appareil 1 de cuisson d'aliments sous pression conforme à l'invention comprend avantageusement un moyen de régulation de pression 4, comme par exemple une soupape, pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, et qui est de préférence de l'ordre de 100 kPa. L'appareil 1 de cuisson d'aliments sous pression peut comporter d'autres organes de fonctionnement (par exemple un moyen de sécurité à l'ouverture 5, une soupape de sécurité à la surpression 6, etc.).

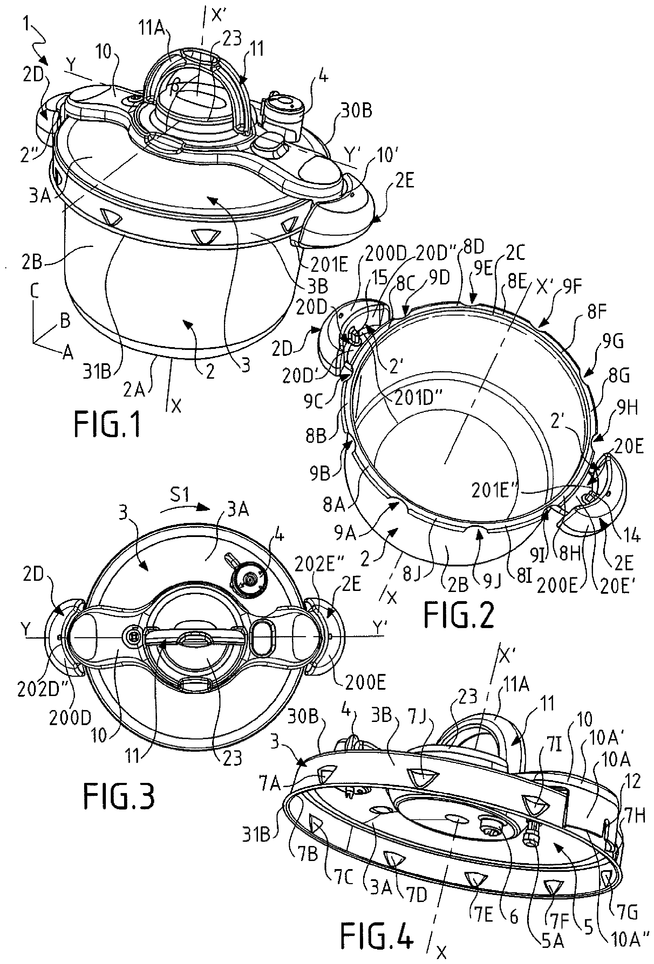

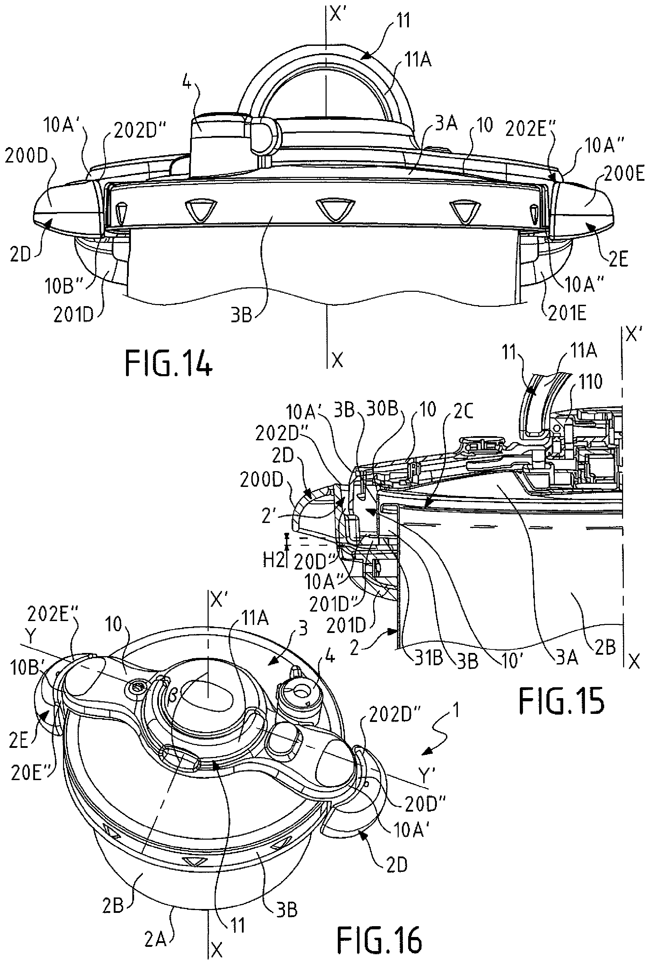

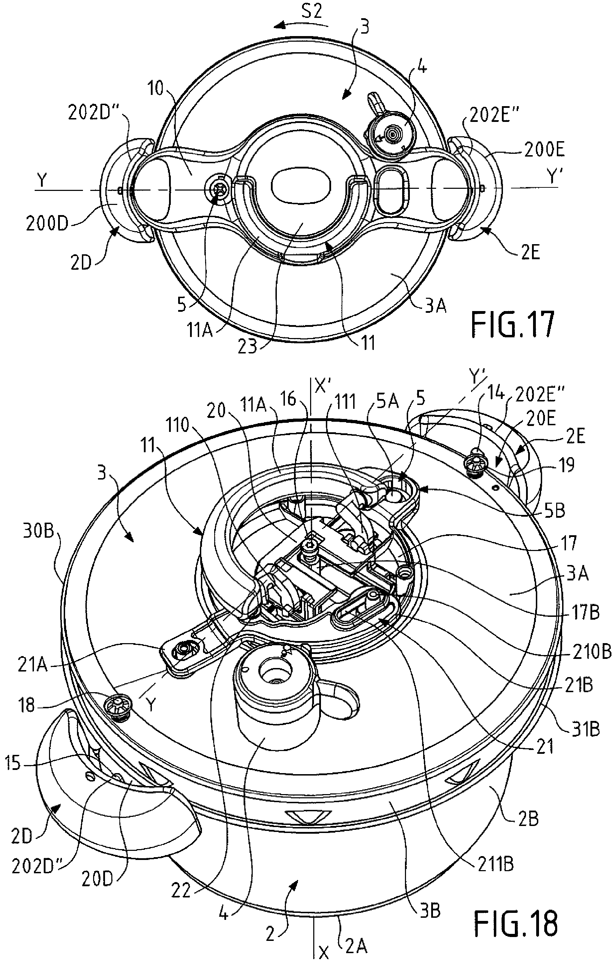

L'appareil 1 conforme à l'invention comporte également un système de verrouillage à baïonnette, afin de permettre à l'enceinte de cuisson formée par l'association du couvercle 3 et de la cuve 2 d'atteindre au moins la pression de fonctionnement susvisée sans risque de voir le couvercle 3 échapper sous l'effet de la pression régnant au sein de l'enceinte. En d'autres termes, le système de verrouillage est conçu pour assurer une liaison mécanique entre la cuve 2 et le couvercle 3 qui soit suffisamment robuste pour empêcher le couvercle 3 de se séparer de la cuve 2 sous l'effet de la montée en pression au sein de l'enceinte de cuisson. Plus précisément, ledit système de verrouillage à baïonnette est conçu pour assurer le verrouillage et le déverrouillage du couvercle 3 relativement à la cuve 2, par pivotement du couvercle 3 relativement à la cuve 2 selon en l'espèce ledit axe vertical central X-X', pour faire ainsi passer l'appareil 1 d'une configuration d'attente de verrouillage, dans laquelle le couvercle 3 est rapporté sur la cuve 2 et repose librement sur cette dernière (figures 1 et 3), à une configuration de verrouillage dans laquelle la cuve 2 et le couvercle 3 interagissent pour empêcher leur libre séparation (figures 16 et 17), et inversement. Ainsi, dans le mode de réalisation illustré aux figures, l'appareil 1 passe de sa configuration d'attente de verrouillage à sa configuration de verrouillage par rotation du couvercle 3 relativement à la cuve 2 selon une course angulaire prédéterminée autour de l'axe central X-X', dans un sens horaire S1, et passe de sa configuration de verrouillage à sa configuration d'attente de verrouillage par rotation du couvercle 3 relativement à la cuve 2 selon ladite course angulaire prédéterminée autour de l'axe central X-X' dans un sens antihoraire opposé S2 (figures 3 et 17), étant entendu que l'inverse est tout à fait possible sans que l'on sorte du cadre de l'invention (sens S1 antihoraire et sens S2 horaire). Le système de verrouillage à baïonnette de l'appareil de cuisson 1 comprend avantageusement à cet effet des première et deuxième séries d'excroissances 7A-7J, 8A-8J qui sont solidaires respectivement du couvercle 3 et de la cuve 2 et qui sont conçus, afin d'assurer le verrouillage et le déverrouillage du couvercle 3 relativement à la cuve 2, pour venir s'engager, respectivement se dégager, mutuellement par rotation du couvercle 3 relativement la cuve 2 autour de l'axe vertical central X-X' selon ladite course angulaire prédéterminée. Comme cela est bien connu en tant que tel, les excroissances 7A-7J, 8A-8J de chacune desdites première et deuxième séries sont destinées à coopérer deux à deux, c'est-à-dire que chaque excroissances de l'une desdites séries est amenée, par rotation du couvercle 3 relativement à la cuve 2, à passer sous une excroissance correspondante de l'autre série pour verrouiller le couvercle 3 relativement la cuve 2. Dans le mode de réalisation illustré aux figures, ladite ceinture annulaire 3B porte ladite première série d'excroissances 7A-7J. De préférence lesdites excroissances 7A-7J de la première série, solidaires du couvercle 3, font saillie radialement vers l'intérieur du couvercle 3, tandis que les excroissances 8A-8J de la deuxième série, solidaires de la cuve 2, font saillie radialement à partir de la face externe de la paroi latérale 2B de la cuve 2, vers l'extérieur de cette dernière. Il est cependant parfaitement envisageable que les excroissances de verrouillage 7A-7J du couvercle fassent saillie vers l'extérieur du couvercle 3 et que les excroissances 8A-8J de cuve fassent alors saillies radialement vers l'intérieur de cette dernière. L'invention n'est donc pas limitée à une configuration particulière des rampes de verrouillage du système à baïonnette, l'essentiel étant que les excroissances de couvercle 7A-7J et de cuve 8A-8J, formant respectivement des rampes de couvercle et de cuve, coopèrent ensemble par mise en rotation relative de la cuve 2 et du couvercle 3, en l'espèce selon l'axe vertical central X-X', pour que les rampes de couvercle viennent se positionner sous les rampes de cuve afin de réaliser une liaison mécanique entre la cuve 2 le couvercle 3 capable de résister à la pression interne régnant dans l'enceinte de cuisson. Dans l'exemple illustré aux figures, chaque excroissances 7A-7J de couvercle est constituée par un élément en volume obtenu par une déformation volumique locale de la matière constitutive de l'enveloppe du couvercle 3, et plus précisément de la ceinture annulaire 3B le long de laquelle sont de préférence disposée, à intervalles réguliers ou non, les excroissances 7A-7J. L'invention n'est cependant absolument pas limitée à la mise en oeuvre d'excroissances 7A-7J spécifiques, et en particulier obtenues par emboutissage comme dans l'exemple illustré aux figures. Il est par exemple tout à fait envisageable que les excroissances 7A-7J de couvercle soient formées par des languettes plates obtenues par repliement localisé vers l'intérieur du bord libre 31B de la ceinture annulaire 3B du couvercle 3. Dans l'exemple illustré aux figures, les excroissances 8A-8J de cuve sont formées par un rebord annulaire qui déborde vers l'extérieur à partir du bord supérieur libre 2C, des encoches 9A-9J étant ménagée à travers ledit rebord annulaire de façon à permettre le passage desdites excroissances 7A-7J de couvercle, de sorte que les portions dudit rebord annulaire qui s'étendent entre chaque encoche 9A-9J forment les rampes de cuve respectives destinées à coopérer avec les excroissances 7A-7J de couvercle qui forment les rampes de couvercle. Ainsi, lorsque le couvercle 3 vient coiffer la cuve 2, les excroissances 7A-7J de couvercle peuvent passer par les encoches 9A-9J pour se retrouver plus bas que le rebord annulaire. L'appareil 1 se trouve alors dans sa configuration de pré-verrouillage (également appelée ici configuration d'attente de verrouillage), à partir de laquelle la configuration de verrouillage peut être atteinte en faisant simplement tourner le couvercle 3 relativement à la cuve 2 selon l'axe vertical X-X', ce qui a pour effet de décaler angulairement les excroissances 7A-7J du couvercle 3 et les encoches 9A-9J du rebord annulaire, réalisant un verrouillage de type « *à baïonnette* ». De préférence, dans le mode de réalisation illustré aux figures, les excroissances de couvercle 7A-7B sont localisées sur la ceinture annulaire 3B du couvercle 3 à distance du second bord libre circulaire 31B de ladite ceinture annulaire 3B, de manière à ce que la ceinture annulaire 3B forme, en deçà desdits éléments en volume, une jupe d'auto-centrage du couvercle 3 relativement à la cuve 2. Cette jupe annulaire permet, en coopération avec le rebord latéral quasi-continu (à l'exception des encoches 9A-9J) formant les rampes de cuve, au couvercle 3 de se positionner naturellement et spontanément de manière centrée relativement à la cuve 2 lorsqu'il est déposé sur cette dernière.

Conformément à l'invention, l'appareil 1 comprend un sous-ensemble de couvercle (illustré isolément par la figure 4) qui inclut à la fois le couvercle 3 ainsi qu'un support 10 attaché audit couvercle 3, en l'espèce de façon permanente, de façon que ce dernier puisse pivoter relativement audit support 10, de préférence entre deux positions correspondant respectivement en l'espèce à une configuration de déverrouillage et une configuration de verrouillage dudit sous-ensemble de couvercle. Conformément au mode de réalisation illustré aux figures, ledit sous-ensemble de couvercle est indépendant de la cuve 2, de sorte qu'il peut être librement manipulé et déplacé indépendamment de la cuve 2. En d'autres termes, ledit sous-ensemble n'est avantageusement pas attaché ou relié à la cuve 2 de façon permanente (ce qui signifie en particulier que le sous-ensemble de couvercle et la cuve 2 ne sont pas reliés par une charnière ou une autre liaison mécanique). Le sous-ensemble de couvercle peut donc être librement manipulé et déplacé par un utilisateur, indépendamment de la cuve 2, selon une trajectoire libre. Avantageusement et comme illustré aux figures, ledit sous-ensemble de couvercle indépendant repose librement contre la cuve 2 (et en l'espèce sur la cuve 2) lorsque lesdits sous-ensemble de couvercle et cuve 2 sont associés selon ledit deuxième agencement, lequel correspond avantageusement à la configuration d'attente de verrouillage. Cela signifie que dans le deuxième agencement (et de préférence dans le premier agencement également), le sous-ensemble de couvercle n'est pas attaché à la cuve 2 (notamment par une charnière ou une quelconque articulation).

Les deux positions entre lesquelles le couvercle 3 peut pivoter relativement au support 10 sont avantageusement séparées par une course angulaire prédéterminée correspondant à celle requise pour faire passer l'appareil 1 de sa configuration de pré-verrouillage illustrée à la figure 1 à sa configuration de verrouillage illustrée par exemple à la figure 16. Par exemple, dans le mode de réalisation illustré aux figures, l'appareil 1 comprend au moins un pion de guidage 18, et de préférence deux pions de guidage 18, 19 disposés de façon diamétralement opposée relativement à l'axe central X-X' et attachés au couvercle 3 de façon permanente (par exemple en étant soudés sur ce dernier de façon à s'élever verticalement de la surface externe dudit couvercle 3, en l'espèce à la périphérie de ce dernier, comme illustré aux figures). Chacun desdits pions de guidage 18, 19 est conçu pour coulisser au sein d'une gorge allongée complémentaire de guidage 18A, 19A ménagée dans le support 10, par exemple vers chaque extrémité dudit support 10. La longueur de chaque gorge 18A, 19A est adaptée en l'espèce à la course angulaire du couvercle 3 relativement au support 10. Chaque pion 18, 19 est en outre pourvu d'une tête de section élargie qui coopère avec les bords de la gorge correspondante 18A, 19A pour retenir verticalement le support 10 et l'empêcher de s'écarter verticalement du couvercle 3.

Le sous-ensemble de couvercle forme ainsi un élément unitaire indépendant destiné à être associé avec le sous-ensemble de cuve formé par la cuve 2 elle-même et les poignées de cuve 2D, 2E, pour former l'enceinte de cuisson. De préférence, ledit sous-ensemble de couvercle inclut également un joint d'étanchéité (non illustré) qui présente avantageusement une forme annulaire et qui est préférentiellement porté par le couvercle 3. Ledit joint d'étanchéité est destiné à être interposé entre le couvercle 3 et la cuve 2 lorsque le couvercle 3 est verrouillé relativement à la cuve 2 pour assurer l'étanchéité de l'enceinte de cuisson. Dans le mode de réalisation illustré aux figures, le support 10 est attaché audit couvercle 3 de façon que ce dernier puisse pivoter relativement audit support 10 selon ledit axe vertical central X-X'. La liaison pivot entre le couvercle 3 et le support 10 peut être réalisée par tout moyen connu de l'homme du métier.

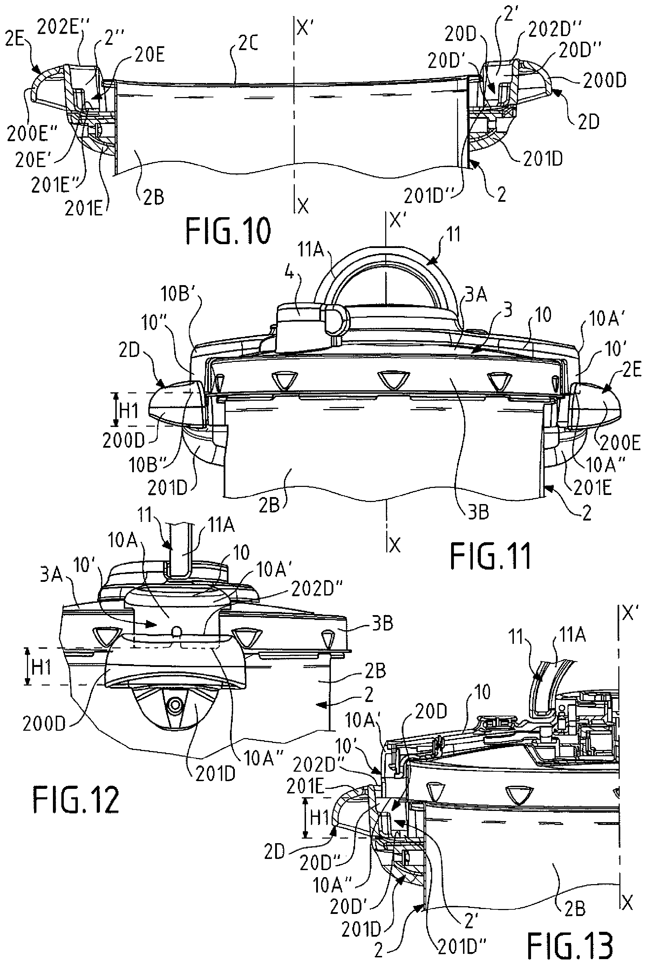

Conformément à l'invention, lesdits sous-ensemble de couvercle et cuve 2 sont conçus pour pouvoir être associés selon au moins un premier agencement (illustré aux figures 10 à 13) conformément auquel le couvercle 3 surmonte la cuve 2, c'est-à-dire se trouve au-dessus et sensiblement au droit de la cuve 2, de préférence de sorte à s'étendre sensiblement parallèlement au fond 2A de la cuve 2, de sorte que ladite première série d'excroissances 7A-7J se trouve sensiblement plus haut que ladite deuxième série d'excroissances 8A-8J. Ce premier agencement est un agencement de pré-accostage, dans lequel se trouvent temporairement, et même fugitivement, le sous-ensemble de couvercle et la cuve 2 lorsque le sous-ensemble de couvercle est en train d'être rapporté par un utilisateur sur la cuve 2 en vue de fermer ainsi la cuve 2 afin de former une enceinte de cuisson étanche. Selon ce premier agencement, le couvercle 3 se trouve au-dessus de la cuve 2, maintenu à distance de cette dernière par l'utilisateur qui est en train de rapporter manuellement le sous-ensemble de couvercle sur la cuve 2. Le poids du sous-ensemble de couvercle ne s'exerce donc pas encore sur la cuve 2 et ladite première série d'excroissances 7A-7J n'est pas encore passée à travers les encoches 9A-9J. Le premier agencement correspond donc à un positionnement instable du sous-ensemble de couvercle relativement la cuve 2 qui intervient momentanément sur la trajectoire suivie par le sous-ensemble de couvercle lorsqu'il est en train d'être amené en direction de la cuve 2 en vue de former l'enceinte de cuisson. À l'instant où le sous-ensemble de couvercle et la cuve 2 se trouvent dans le premier agencement en question, l'altitude (mesurée par exemple selon l'axe vertical central X-X', à partir du fond 2A de la cuve 2) de la première série d'excroissances 7A-7J portée par le couvercle 3 est donc sensiblement supérieure à celle de la deuxième série d'excroissances 8A-8J portée par la cuve 2.

Conformément à l'invention, lesdits sous-ensemble de couvercle et cuve 2 sont également conçus pour pouvoir être associés selon un deuxième agencement, obtenu à partir dudit premier agencement susvisé par un déplacement descendant (c'est-à-dire en l'espèce un déplacement vertical de haut en bas, ledit déplacement n'incluant de préférence pas de rotation) dudit sous-ensemble de couvercle jusqu'à ce que ladite première série d'excroissances 7A-7J portée par le couvercle 3 se retrouve sensiblement plus bas que ladite deuxième série d'excroissances 8A-8J portée par la cuve 2. Le deuxième agencement forme donc un agencement de pré-verrouillage (correspondant à la configuration de pré-verrouillage de l'appareil 1 évoquée précédemment), à partir duquel il est possible de verrouiller le couvercle 3 relativement à la cuve 2 par simple pivotement du couvercle 3 relativement au support 10 et à la cuve 2. Le deuxième agencement autorise donc le pivotement du couvercle 3 relativement au support 10 pour amener ladite première série d'excroissances 7A-7J sous ladite deuxième série d'excroissances 8A-8J en correspondance de verrouillage. Ainsi, lorsque le sous-ensemble de couvercle et la cuve 2 sont associés selon ledit premier agencement, les rampes de couvercle (formées par la première série d'excroissances 7A-7J) sont disposées au droit de la série d'encoches 9A-9J de sorte que le déplacement descendant conduisant au deuxième agencement permet à chaque excroissance 7A-7J de couvercle de passer par une encoche correspondante 9A-9J pour se retrouver à une altitude sensiblement inférieure à celle des excroissances 8A-8J formant les rampes de cuve. Il suffit ensuite de faire pivoter le couvercle 3 relativement au support 10 selon la course angulaire prédéterminée évoquée précédemment pour faire passer ainsi le sous-ensemble de couvercle, alors qu'il se trouve associé à la cuve 2 selon le deuxième agencement, de sa configuration de déverrouillage à sa configuration de verrouillage, afin d'amener les rampes de couvercle 7A-7J en correspondance avec les rampes de cuve 8A-8J, sous ces dernières, verrouillant ainsi le couvercle 3 relativement à la cuve 2. Avantageusement, lesdits sous-ensemble de couvercle et cuve 2 sont conçus pour que lorsqu'ils sont associés selon ledit deuxième agencement, le sous-ensemble de couvercle repose directement en appui contre la cuve 2, en l'espèce par l'intermédiaire du joint d'étanchéité porté par le couvercle 3, qui se retrouve interposé entre le bord supérieur libre 2C et le couvercle 3. Le deuxième agencement est donc avantageusement un agencement stable de pré-verrouillage, selon lequel le sous-ensemble de couvercle repose en équilibre sur et contre le bord supérieur libre 2C de la cuve 2 (l'utilisateur n'exerçant alors plus aucun effort de soulèvement manuel du sous-ensemble de couvercle). Dans l'exemple illustré aux figures, le déplacement descendant est un déplacement en translation parallèlement audit axe vertical central X-X', c'est-à-dire que pour passer du premier agencement au deuxième agencement le sous-ensemble de couvercle coulisse verticalement, selon une trajectoire rectiligne, en direction du fond 2A de la cuve 2, alors que cette dernière reste immobile. Comme illustré aux figures, la cuve 2 est localement entourée par le second bord annulaire libre 31B lorsque lesdits sous-ensemble de couvercle et cuve 2 sont associés selon ledit deuxième agencement. Cela signifie que dans le deuxième agencement, comme cela ressort en particulier de la figure 15, la ceinture annulaire 3B est positionnée de façon sensiblement concentrique à la paroi latérale 2B de la cuve 2, de façon à entourer la partie terminale libre de cette dernière, incluant au moins le bord supérieur libre 2C. Au contraire, lorsque lesdits sous-ensemble de couvercle et cuve 2 sont associés selon le premier agencement, ledit second bord annulaire libre 31B se trouve plus haut que la cuve 2, comme cela ressort notamment des figures 11 à 13, et n'entoure de ce fait pas ladite cuve 2. En d'autres termes, lorsque le sous-ensemble de couvercle et la cuve 2 sont positionnés l'un par rapport à l'autre selon ledit premier agencement, le second bord annulaire libre 31B se trouve à une altitude sensiblement supérieure à l'altitude du bord supérieur libre 2C de la cuve 2, le déplacement descendant permettant de passer du premier au deuxième agencement consistant à faire descendre la ceinture annulaire 3B de façon que le second bord annulaire libre 31B se retrouve à une altitude inférieure à celle du bord supérieur libre 2C de la cuve 2, ce positionnement relatif correspondant au second agencement.

Conformément à l'invention, lesdits support 10 et cuve 2 sont respectivement pourvus de premier élément de guidage 10', 10" et deuxième élément de guidage 2', 2" complémentaires conçus pour collaborer dès que ledit sous-ensemble de couvercle et la cuve 2 sont associés selon ledit premier agencement, afin de guider ledit sous-ensemble de couvercle dans son déplacement descendant évoqué précédemment, permettant de passer du premier agencement au deuxième agencement. Les premier et deuxième éléments de guidage complémentaires 10', 10", 2', 2" sont donc conçus pour pouvoir se retrouver dans une position relative spécifique, lorsque le sous-ensemble de couvercle et la cuve 2 sont associés selon le premier agencement, qui procure une fonctionnalité d'aide au positionnement du support 10 et de la cuve 2, afin de guider le sous-ensemble de couvercle dans son déplacement descendant conduisant au deuxième agencement. Cela signifie que lorsque le sous-ensemble de couvercle et la cuve 2 sont associés selon le premier agencement susvisé, le premier élément de guidage 10', 10" interagit mécaniquement avec le deuxième élément guidage complémentaire 2', 2" pour aider l'utilisateur à placer le support 10 et la cuve 2 dans une position relative prédéterminée à partir de laquelle ledit sous-ensemble de couvercle et la cuve 2 pourront atteindre leur deuxième agencement par simple rapprochement mutuel en translation pure parallèlement à l'axe vertical central X-X' du support 10 et de la cuve 2. Grâce à cette caractéristique, le sous-ensemble de couvercle est guidé précocement dans sa trajectoire de descente verticale vers la cuve 2 pour venir coiffer cette dernière selon le deuxième agencement, c'est-à-dire qu'il est guidé avant même que les rampes de couvercle n'interagissent d'une manière ou d'une autre avec le rebord annulaire qui déborde vers l'extérieur à partir du bord supérieur libre 2C pour former les rampes de cuve 8A-8J et les encoches de passage 9A-9J. Ceci permet de garantir que lorsque le couvercle 3 coiffera ensuite effectivement la cuve 2, il sera parfaitement positionné relativement à la cuve 2 pour permettre aux rampes de couvercle 7A-7J de passer par les encoches 9A-9J afin de pouvoir se retrouver plus bas que les rampes de cuve, dans une configuration de pré-verrouillage. Cette caractéristique facilite grandement le positionnement adéquat du couvercle 3 relativement à la cuve 2, en évitant d'avoir à recourir à plusieurs tentatives, « *à l'aveuglette* », au contraire des appareils de l'art antérieur avec lesquels il est fréquent que l'utilisateur rapporte le couvercle 3 relativement à la cuve 2 selon une orientation incorrecte qui ne permet pas le passage direct, à la première tentative, des rampes de couvercle 7A-7J par les encoches de passage 9A-9J. L'invention a ainsi permis d'établir que la mise en oeuvre d'un guidage préalable, qui commence à avoir lieu non pas lorsque la première série d'excroissances 7A-7J se trouve sensiblement à la même hauteur ou plus bas que ladite deuxième série d'excroissances 8A-8J, mais bien alors que ladite première série d'excroissances 7A-7J se trouve encore à une altitude supérieure à celle de ladite deuxième série l'excroissances 8A-8J, contribue à conférer un caractère particulièrement ergonomique et pratique à l'autocuiseur 1.

Avantageusement, lesdits premier élément de guidage 10', 10" et deuxième élément de guidage 2', 2" complémentaires sont conçus pour guider sensiblement continûment le sous-ensemble de couvercle dans son déplacement descendant jusqu'à l'obtention dudit deuxième agencement. Cela signifie que lesdits premier et deuxième éléments de guidage 10', 10", 2', 2" complémentaires interagissent mutuellement sur toute la trajectoire du sous-ensemble de couvercle pendant le déplacement descendant de ce dernier, afin d'éviter que ledit sous-ensemble de couvercle ne quitte complètement ladite trajectoire, par exemple en se décalant angulairement dans le plan horizontal perpendiculaire à l'axe vertical central X-X' ou dans un plan vertical parallèle audit axe vertical central X-X', ou en se décalant axialement par translation horizontale. En d'autres termes, lesdits premier et deuxième éléments du guidage 10', 10", 2', 2" complémentaires collaborent dès que lesdits sous-ensemble de couvercle et cuve 2 sont associés selon le premier agencement et poursuivent leur collaboration de guidage et d'aide au positionnement au moins jusqu'à l'obtention du deuxième agencement.

Avantageusement, ladite collaboration desdits premier et deuxième éléments guidage 10', 10", 2', 2" pour guider ledit sous-ensemble de couvercle dans son déplacement descendant entre le premier agencement et le deuxième agencement est une collaboration de type mâle/femelle, reposant sur l'insertion de tout ou partie d'une portion mâle, c'est-à-dire d'une portion présentant une surface sensiblement convexe, dans une portion femelle, c'est-à-dire une portion présentant une surface concave, pour réaliser un guidage, par mise en regard des portions mâle et femelle. Ladite coopération mâle/femelle repose par exemple sur un emboîtement mutuel desdits premier et deuxième éléments de guidage 10', 10", 2', 2". A cette fin, lesdits premier et deuxième éléments de guidage 10', 10", 2', 2" présentent respectivement une conformation mâle qui présente avantageusement un profil bombé et une conformation femelle qui présente avantageusement un profil incurvé conjugué audit profil bombé, lesdites conformation mâle et conformation femelle étant ainsi complémentaires. Il est cependant tout à fait envisageable, sans pour autant que l'on sorte du cadre de l'invention, que ce soit au contraire le deuxième élément guidage 2', 2" qui présente une conformation mâle et le premier élément guidage 10', 10" qui présente une conformation femelle.

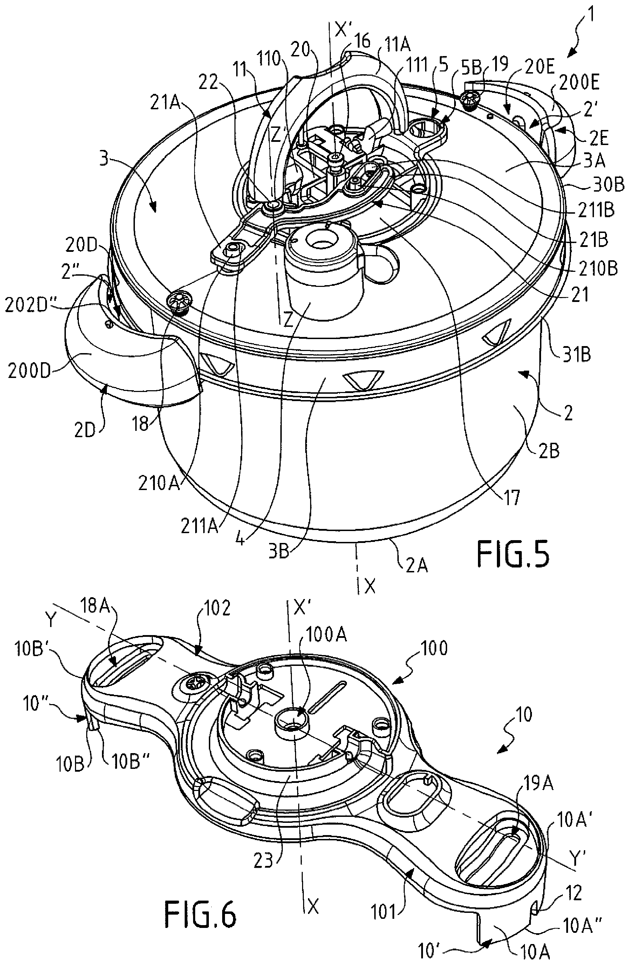

De préférence, le deuxième élément guidage 2', 2" est porté par ladite poignée de cuve 2D, 2E. Dans le mode de réalisation illustré aux figures, la cuve 2 est pourvue de deux deuxièmes éléments de guidage 2', 2" disposés de façon diamétralement opposée relativement à l'axe vertical central X-X'. Lesdits deuxièmes éléments de guidage 2', 2" forment ainsi deux conformations femelles qui sont fixées sur la face externe de la paroi latérale 2B de la cuve 2 et qui sont avantageusement portées respectivement par les deux poignées de cuve 2D, 2E, et encore plus préférentiellement directement formées par ces dernières. Avantageusement, le support 10 déborde quant à lui radialement du couvercle 3 auquel il est attaché, pour former ledit premier élément de guidage 10', 10". En d'autres termes, le support 10 s'étend sensiblement au-delà de la périphérie du couvercle 3 selon la direction radiale Y-Y', de sorte que ledit premier élément de guidage 10', 10" fait saillie latéralement du couvercle 3, et forme donc une excroissance radiale à la périphérie du couvercle 3. Avantageusement, le support 10 comprend une portion supérieure 100, 101, 102 qui est montée au-dessus du couvercle 3, par exemple sur et contre la face externe de l'élément de couverture discoïde 3A et qui déborde radialement de ce dernier pour se prolonger par un bord tombant vertical 10A, 10B qui porte ledit premier élément de guidage 10', 10", et qui de façon encore plus préférentielle forme ladite conformation mâle dudit élément de guidage 10', 10" en question. Ledit bord tombant 10A, 10B s'étend en l'espèce localement en regard de la ceinture annulaire 3B, sensiblement parallèlement à cette dernière. Le bord tombant vertical 10A, 10B présente avantageusement une forme incurvée pour suivre localement le contour circulaire de la ceinture annulaire 3B. Ce profil incurvé du bord tombant vertical 10A, 10B définit une face extérieure convexe qui forme la conformation mâle du premier élément guidage 10', 10". Par exemple, le support 10 se présente, dans le mode de réalisation illustré aux figures, sous la forme d'une traverse, c'est-à-dire d'une pièce sensiblement allongée qui s'étend diamétralement sur le couvercle 3 et qui se prolonge en l'espèce à chacune de ses extrémités par deux bords tombants 10A, 10B respectifs formant respectivement deux premiers éléments de guidage 10', 10" disposés de manière diamétralement opposée relativement à l'axe vertical central X-X'. De préférence, la traverse en question comporte une zone centrale élargie 100, par exemple de forme globalement circulaire, prolongée de part et d'autre par un premier bras 101 et un deuxième bras 102 qui eux-mêmes se terminent respectivement par lesdits bords tombants 10A, 10B. La portion centrale 100 est avantageusement pourvue d'un orifice central dans lequel est destiné être enfilé un axe 30 fixé sur le couvercle 3, au centre de ce dernier, et autour duquel le support 10 est destiné à tourner selon l'axe vertical central X-X'. L'axe 30 est par exemple soudé sur le couvercle 3 de façon à s'élever verticalement à partir du centre de ce dernier, et ainsi à pouvoir être inséré dans ledit orifice 100A. De préférence, l'axe 30 est pourvu d'un évidement fileté destiné à coopérer avec une vis 16 afin de fixer le support 10 au couvercle 3 tout en permettant au couvercle 3 de pivoter autour de l'axe 30. Avantageusement, le support 10 comprend, outre la pièce en forme de traverse illustrée à la figure 6, une platine 17 qui présente une forme globalement circulaire sensiblement complémentaire de celle de la portion centrale 100 de la traverse et qui est destinée à être interposée entre ladite traverse et la face supérieure du couvercle 3 pour former un boîtier destiné à accueillir au moins en partie un mécanisme de commande du pivotement du couvercle 3 relativement au support 10 qui sera décrit plus en détails ci-après. Par exemple, conformément au mode de réalisation illustré aux figures, la platine 17 se présente sous la forme d'une coupelle en matière plastique pourvue d'un orifice central, lequel se prolonge par un tube cylindrique vertical au sein duquel est destiné à être inséré l'axe 30. La traverse visible à la figure 6 est elle-même conçue pour être fixée (par exemple au moyen de plusieurs vis) de manière permanente à la platine 17, afin de former avec cette dernière un sous-ensemble de traverse unitaire, monobloc, maintenu sur le couvercle 3 au moyen de l'accouplement axe 30 / vis 16, lequel accouplement autorise le pivotement du couvercle 3 relativement au sous-ensemble de traverse précité formant en l'espèce le support 10.

Avantageusement, la conformation femelle du deuxième élément guidage 2', 2" forme un logement 20D, 20E destiné à accueillir graduellement le premier élément guidage 10', 10" au fur et à mesure que le sous-ensemble de couvercle descend vers la cuve 2 pour passer du premier agencement au deuxième agencement. Ledit logement 20D, 20E est avantageusement délimité par au moins un fond 20D', 20E', qui est de préférence sensiblement horizontal, et à partir duquel s'étend verticalement une paroi latérale 20D", 20E" entre un bord inférieur 201D", 201E" et un bord supérieur 202D", 202E". Ledit logement 20D, 20E est avantageusement destiné à accueillir en son sein, par insertion verticale descendante, ladite conformation mâle du premier élément de guidage 10', 10", formé en l'espèce par le bord vertical tombant 10A, 10B. Ladite paroi latérale 20D", 20E" dudit logement 20D', 20E' s'élève sensiblement verticalement, sensiblement parallèlement à la paroi latérale 2B de la cuve 2, et présente un profil sensiblement incurvé de façon à former une concavité disposée en regard de la paroi latérale 2B de la cuve 2. La forme de cette concavité est sensiblement conjuguée, comme exposé précédemment, à la forme convexe du bord tombant vertical 10A, 10B formant le premier élément de guidage 10', 10". Avantageusement, ladite conformation mâle du premier élément guidage 10', 10" s'étend verticalement entre un bord supérieur 10A', 10B' et un bord inférieur 10A", 10B" correspondant respectivement en l'espèce aux extrémités haute et basse du bord tombant vertical 10A, 10B issu du support 10. Ainsi, lorsque ledit sous-ensemble de couvercle et la cuve 2 sont associés selon ledit premier agencement, ladite conformation mâle est insérée dans ledit logement 20D, 20E de façon que le bord inférieur 10A", 10B" de la conformation mâle se retrouve plus bas que le bord supérieur 202D", 202E" de la paroi latérale 20D", 20E" dudit logement 20D, 20E et soit séparée verticalement du fond 20D', 20E' du logement 20D, 20E par une première hauteur H1.

Avantageusement, lorsque ledit sous-ensemble de couvercle et la cuve 2 sont associés selon ledit deuxième agencement, ladite conformation mâle est insérée dans le logement 20D, 20E de façon que le bord inférieur 10A", 10B" de la conformation mâle se retrouve plus bas que le bord supérieur 202D", 202E" de ladite paroi latérale 20D", 20E" dudit logement 20D, 20E et soit séparé verticalement du fond 20D', 20E' du logement 20D, 20E par une deuxième hauteur H2 inférieure à ladite première hauteur H1. Avantageusement, ladite deuxième hauteur H2 est non nulle, c'est-à-dire que la conformation mâle ne vient pas en contact avec le fond 20D', 20E' lorsque le sous-ensemble de couvercle et la cuve 2 sont associés selon ledit deuxième agencement. Ainsi, lesdits sous-ensemble de couvercle et cuve 2 sont conçus pour que lorsqu'ils sont associés selon le deuxième agencement, le sous-ensemble de couvercle repose directement en appui contre la cuve 2 de façon à maintenir un écartement vertical (correspondant à la distance non nulle H2) entre lesdits premier et deuxième éléments de guidage 10', 10", 2', 2", de sorte que ledit premier élément guidage 10', 10" n'exerce pas d'appui vertical sur ledit deuxième élément de guidage 2', 2". La coopération entre lesdits premier élément de guidage 10', 10" et deuxième élément guidage 2', 2" est donc avantageusement uniquement une coopération de positionnement et de guidage, et non une coopération de support d'un élément de guidage par l'autre. Avantageusement, ledit logement 20D, 20E est porté par la poignée de cuve 2D, 2E, et est de préférence directement formé par ladite poignée de cuve 2D, 2E. Conformément au mode de réalisation illustré aux figures, ladite poignée 2D, 2E comprend une portion de préhension 200D, 200E qui est conformée pour pouvoir être saisie manuellement afin de permettre la manipulation de la cuve 2 par son intermédiaire. En d'autres termes, ladite portion de préhension 200D, 200E présente une forme qui la rend adaptée à être attrapée à la main par un utilisateur en vue de soulever ou transporter la cuve 2. De préférence, ladite poignée 2D, 2E comprend également une portion de fixation 201D, 201E qui relie lesdites cuve 2 et portion de préhension 200D, 200E. Dans le mode de réalisation illustré aux figures, la portion de fixation 201D, 201E s'étend radialement vers l'extérieur de la paroi latérale 2B de la cuve 2, et supporte la portion de préhension correspondante 200D, 200E. De façon préférentielle, ledit logement 20D, 20E est délimité (i) verticalement par la portion de fixation 201D, 201E, qui forme avantageusement le fond 20D', 20E' du logement 20D, 20E et (ii) latéralement par la portion de préhension 200D, 200E qui forme en l'espèce ladite paroi latérale 20D", 20E" dudit logement 20D, 20E.

Avantageusement, l'appareil 1 comprend en outre un premier élément de positionnement 12, 13 qui est porté par le support 10 et qui est conçu pour interagir mécaniquement, lorsque ledit sous-ensemble de couvercle et la cuve 2 sont associés selon ledit deuxième agencement, avec un deuxième élément de positionnement 14, 15 complémentaire porté par la cuve 2, et de façon préférentielle par la poignée 2D, 2E de cuve, pour verrouiller le positionnement angulaire relatif du support 10 et de la cuve 2 dans un plan horizontal (qui est en l'espèce perpendiculaire audit axe vertical central X-X'). Cette interaction mécanique permet d'empêcher le support 10 de pouvoir pivoter relativement à la cuve 2, en l'espèce selon ledit axe vertical central X-X', lorsque le sous-ensemble de couvercle et la cuve 2 sont réunis selon ledit deuxième agencement de pré-verrouillage. Cela signifie que l'association du sous-ensemble de couvercle et de la cuve 2 selon ledit deuxième agencement entraîne un inter-verrouillage du support 10 et de la cuve 2, par coopération desdits premiers élément de positionnement 12, 13 et deuxième élément de positionnement 14, 15, afin d'obtenir un verrouillage de la position angulaire relative du support 10 et de la cuve 2. Ce verrouillage angulaire dans le plan horizontal permet au support 10 de jouer le rôle d'un bâti fixe immobile relativement à la cuve 2 et par rapport auquel le couvercle 3 peut pivoter autour de l'axe vertical central X-X' selon ladite course angulaire prédéterminée (qui est par exemple de l'ordre de 15°) pour passer d'un état déverrouillé (illustré à la figure 1) à un état verrouillé (illustré à la figure 16).

Avantageusement, ladite interaction mécanique dudit premier élément de positionnement 12, 13 avec ledit deuxième élément de positionnement 14, 15 est une coopération mâle/femelle, reposant sur l'insertion de tout ou partie d'une portion mâle dans une portion femelle pour réaliser un blocage mécanique de verrouillage angulaire. Ladite coopération mâle/femelle repose par exemple sur un emboîtement mutuel desdits premier élément de positionnement 12, 13 et deuxième élément de positionnement 14, 15. De préférence, conformément au mode de réalisation illustré aux figures, les premier et deuxième éléments de positionnement 12, 13, 14, 15 présentent respectivement une conformation femelle et une conformation mâle complémentaires. Il est cependant tout à fait envisageable, sans pour autant que l'on sorte du cadre de l'invention, que le premier élément de positionnement 12, 13 présente plutôt une conformation mâle tandis que le deuxième élément de positionnement 14, 15 présente une conformation femelle. Dans le mode de réalisation illustré aux figures, la cuve 2 est pourvue de deux conformations mâles de cuve 14, 15 disposées de façon diamétralement opposée relativement à l'axe vertical central X-X' et fixées sur la face externe de la paroi latérale 2B de la cuve 2, tandis que le support 10 comporte deux conformations femelle de support 12, 13 complémentaires disposées de façon diamétralement opposée sur le couvercle 3 relativement à l'axe vertical central X-X', lesdites conformations femelle de support 12, 13 étant en l'espèce disposées en regard de la face extérieure de la ceinture annulaire 3B du couvercle 3. Il est cependant tout à fait envisageable, sans pour autant que l'on sorte du cadre de l'invention, que lesdits support 10 et cuve 2 soient pourvus respectivement d'une seule conformation de support et de cuve, ou même que les support 10 et cuve 2 soient pourvus, au lieu de conformations mâle/femelle destinées à coopérer par emboîtement, d'éléments d'inter-verrouillage d'une autre nature reposant sur la mise en oeuvre d'une coopération de force (par friction, clipsage, engrènement, attraction magnétique...) suffisante pour verrouiller la position angulaire relative du support 10 et de la cuve 2.

Avantageusement, et comme illustré aux figures, ledit premier élément de positionnement 12, 13 est formé par une encoche ménagée dans le bord tombant vertical 10A, 10B, tandis que ledit deuxième élément de positionnement 14, 15 est formé par une nervure avantageusement ménagée au sein dudit logement 20D, 20E. Ladite nervure est préférentiellement portée par la poignée 2D, 2E, et de façon encore plus préférentielle fait partie intégrante de cette dernière. Ainsi, dans le mode de réalisation illustré aux figures, chaque poignée de cuve 2D, 2E est fixée de manière permanente à la paroi latérale 2B de la cuve 2 et embarque une conformation mâle respective, qui se présente par exemple sous la forme d'une nervure qui vient avantageusement de matière avec la poignée 2D, 2E correspondante. De préférence, ladite nervure s'élève verticalement à partir du fond 20D', 20E' du logement 20D, 20E et fait saillie radialement vers l'intérieur à partir de la paroi latérale 20D", 20E", comme illustré aux figures. Comme exposé précédemment, le support 10 se présente quant à lui avantageusement sous la forme d'une traverse qui s'étend sur le couvercle 3 (en étant reliée à ce dernier par une liaison pivot) et qui se prolonge à chacune de ses extrémités par des bords tombants verticaux 10A, 10B respectifs, lesquels débordent radialement du couvercle 3 et s'étendent sensiblement parallèlement à la ceinture annulaire 3B, à l'extérieur de cette dernière. Une encoche est avantageusement ménagée dans le bord inférieur libre 10A", 10B" de chacun desdits bords tombants 10A, 10B du support 10, pour former une conformation femelle complémentaire de la nervure formant préférentiellement la conformation mâle.

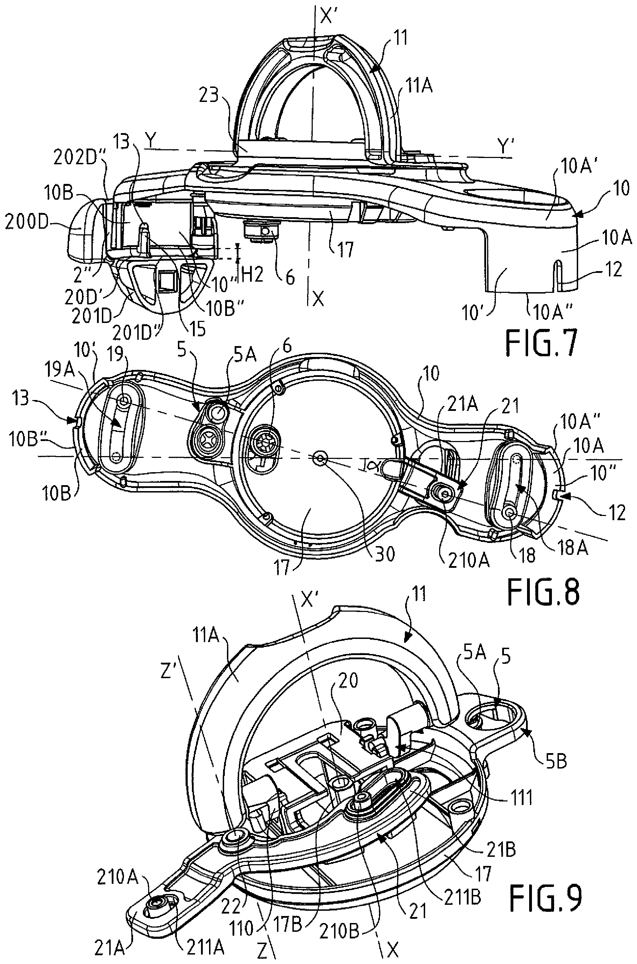

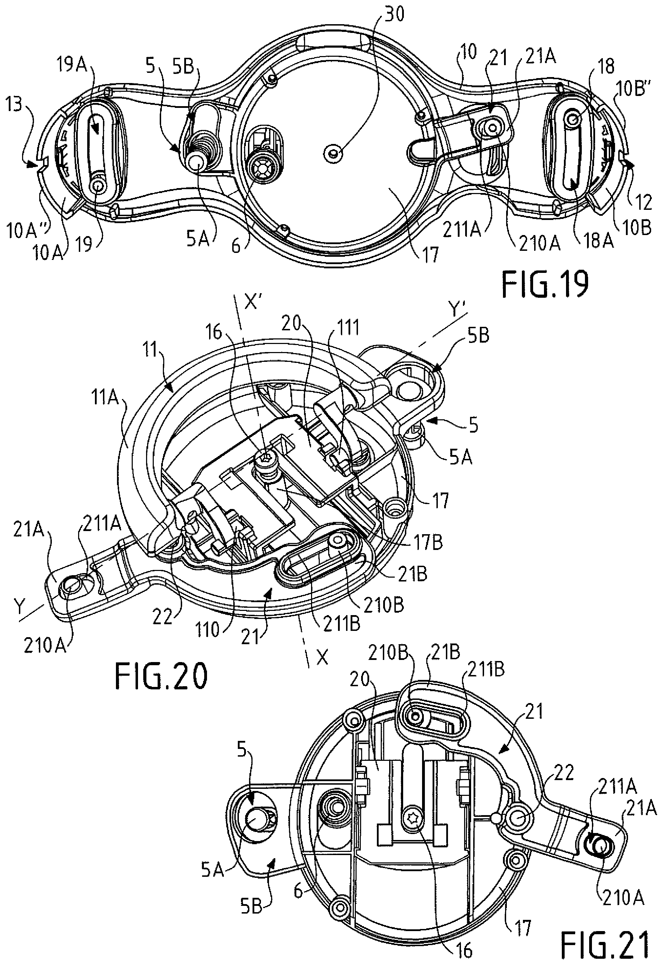

L'appareil 1 comprend par ailleurs avantageusement un organe de commande 11 du système de verrouillage à baïonnette, conçu en l'espèce pour pouvoir être déplacé manuellement relativement au support 10, de façon à permettre à l'utilisateur de commander le verrouillage/déverrouillage du couvercle 3 relativement à la cuve 2, c'est-à-dire le passage de l'appareil 1 de sa configuration de pré-verrouillage (également appelée configuration d'attente de verrouillage - illustrée à la figure 1) à sa configuration de verrouillage (illustrée à la figure 16), et inversement, par mise en rotation du couvercle 3 relativement au support 10 et à la cuve 2. L'organe de commande 11 est avantageusement porté par le support 10, en l'espèce de façon permanente, de sorte qu'il fait partie dudit sous-ensemble de couvercle. Avantageusement, l'organe de commande 11 est monté sur le support 10 de façon à pouvoir être déplacé manuellement relativement à ce dernier entre des positions de verrouillage (figure 16) et de déverrouillage (figure 1). En d'autres termes, l'organe de commande 11 est avantageusement fixé de manière permanente au support 10 tout en conservant une faculté de mobilité relativement à ce dernier, de sorte qu'un utilisateur peut entraîner manuellement en déplacement l'organe de commande 11 relativement au support 10 de la position de déverrouillage à la position de verrouillage et inversement. En outre, l'appareil 1 comprend avantageusement un dispositif de transformation dudit déplacement manuel de l'organe de commande 11 en pivotement du couvercle 3 relativement au support 10. Le dispositif de transformation, qui est en particulier visible aux figures 5, 9, 18, 20 et 21, est donc conçu pour convertir le mouvement de l'organe de commande 11 relativement au support 10 en mouvement rotatif du couvercle 3 relativement à ce même support 10, en l'espèce selon ledit axe vertical centra! X-X', de sorte que l'utilisateur peut ainsi commander le verrouillage/déverrouillage par pivotement du couvercle 3 relativement au support 10 par simple manipulation de l'organe de commande 11, une fois le sous-ensemble de couvercle et la cuve 2 réunis selon ledit deuxième agencement (illustré aux figures 14 à 16, dans lequel les rampes de couvercle sont disposées en deçà des rampes de cuve). Bien entendu, le dispositif de transformation susvisé est conçu en fonction de la nature du déplacement de l'organe de commande 11 relativement au support 10 et pourra mettre en oeuvre tout composant d'entraînement (roue dentée, came, levier, biellette, etc.) requis. La mise en oeuvre d'un organe de commande 11 embarqué sur le support 10 et monté mobile relativement à ce dernier est toutefois parfaitement facultative. Il est par exemple envisageable, sans pour autant que l'on sorte du cadre de l'invention, que l'organe de commande 11 soit formé par une simple poignée fixe attachée directement au couvercle 3 et distincte du support 10, auquel cas la mise en oeuvre d'un dispositif de transformation n'est pas nécessaire. Le recours à un organe de commande 11 embarqué sur le support 10 et monté mobile relativement à ce dernier est toutefois préféré, car elle permet de faciliter l'utilisation de l'appareil 1. Dans ce cas, l'invention n'est absolument pas limitée à la mise en oeuvre d'une liaison mécanique spécifique reliant l'organe de commande 11 et le support 10. L'organe de commande 11 peut ainsi être monté à pivotement et/ou à translation relativement au support 10, par tout moyen approprié. Par exemple, l'organe de commande 11 peut être monté à rotation pure autour d'un axe de rotation qui s'étend selon une direction sécante à la direction de l'axe vertical central X-X', et de façon encore plus préférentielle selon un axe de rotation sécant à l'axe vertical central X-X', ou alternativement être monté en translation relativement au support 10, par exemple à coulissement vertical (préférentiellement selon un axe de coulissement confondu à l'axe vertical central X-X') relativement audit support 10, ou encore être relié au support 10 par une liaison mécanique combinant une translation et une rotation (par exemple une liaison hélicoïdale d'axe X-X'). L'organe de commande 11 peut ainsi se présenter sous la forme d'un élément rotatif du type poignée, levier, manette, anse... et/ou d'un élément coulissant tel qu'un bouton-poussoir, un curseur, etc. Dans le mode de réalisation préférentiel illustré aux figures, l'organe de commande 11 est monté à pivotement relativement audit support 10 selon un axe radial Y-Y' de pivotement qui est perpendiculaire à l'axe vertical central X-X', et est de préférence sécant à ce dernier. Avantageusement, ledit dispositif de transformation comprend un mécanisme démultiplicateur conçu pour entraîner le couvercle 3 en rotation autour dudit axe vertical central X-X', selon une course présentant une première amplitude angulaire prédéterminée a, en réponse à une rotation dudit organe de commande 11 autour dudit axe radial Y-Y' selon une course présentant une seconde amplitude angulaire prédéterminée β supérieure à ladite première amplitude angulaire prédéterminée a. Par exemple, l'organe de commande 11 est conçu pour pivoter autour dudit axe radial Y-Y' entre une position relevée (correspondant au déverrouillage) et une position rabattue (correspondant au verrouillage) séparées par une course présentant une amplitude angulaire prédéterminée β d'environ 90°, tandis que le couvercle 3 pivote relativement au support 10, en réponse au déplacement angulaire d'environ 90° de l'organe de commande 11 relativement au support 10, selon une course présentant une amplitude angulaire prédéterminée α d'environ 15°. Conformément au mode de réalisation illustré aux figures, le dispositif de transformation comprend une pièce de transmission 20 montée mobile en translation dans un plan horizontal perpendiculaire audit axe vertical central X-X' relativement audit support 10. La pièce de transmission 20 est ainsi montée à coulissement relativement au support 10, par exemple au sein du boîtier ménagé entre la platine 17 et la portion centrale 100 qui vient coiffer ladite platine 17. Dans ce mode de réalisation, le dispositif de transformation comprend un mécanisme de transformation du mouvement de pivotement de l'organe de commande 11 relativement au support 10 en mouvement de translation de ladite pièce de transmission 20 relativement audit support 10. Par exemple, le mécanisme de transformation en question est formé par une came 110, 111 solidaire de l'organe de commande 11, ladite came 110, 111 étant pourvue d'un pion qui est reçu dans un logement correspondant ménagé dans la pièce de transmission 20, de façon que le pivotement de l'organe de commande 11 entraîne le pivotement concomitant de la came 110, 111, laquelle repousse alors la pièce de transmission 20 dans le plan horizontal perpendiculaire à l'axe vertical central X-X'. Avantageusement, le dispositif de transformation comprend, conformément au mode de réalisation illustré aux figures, au moins un levier horizontal 21 monté à pivotement relativement au support 10 selon un axe vertical excentré Z-Z' qui est fixe par rapport audit support 10, parallèle audit axe vertical central X-X' et situé à une distance prédéterminée de ce dernier. De préférence, comme illustré aux figures, ledit levier horizontal 21 s'étend longitudinalement entre une première extrémité 21A articulée au couvercle 3 et une deuxième extrémité 21B articulée soit audit organe de commande 11 soit à une pièce de transmission (comme par exemple la pièce de transmission 20 évoquée ci-avant) qui fait partie du dispositif de transformation et qui est entraînée en déplacement relativement au support 10 par l'organe de commande 11, par exemple selon le mode de réalisation exposé précédemment. De préférence, le levier horizontal 21 est pourvu d'un logement (formé par exemple par un orifice traversant) destiné à accueillir un axe 22 solidaire du support 10, et par exemple issu de la platine 17, de façon à réaliser une liaison pivot d'axe Z-Z' entre le levier horizontal 21 et le support 10. De préférence, ledit levier horizontal 21 est monté à pivotement relativement au support 10 en un point de pivotement situé entre lesdites première extrémité 21A et deuxième extrémité 21B, de sorte que l'axe vertical excentré Z-Z' passe par une zone du levier horizontal 21 qui est située à distance à la fois de la première et de la deuxième extrémité 21A, 21B. L'articulation de la première extrémité 21A relativement au couvercle 3 est par exemple réalisée au moyen d'un premier goujon 210A qui est solidaire du couvercle 3, et qui est par exemple soudé sur la face externe dudit couvercle 3 de manière à s'élever verticalement à partir de ce dernier. Ledit goujon 210A est avantageusement reçu dans une première gorge correspondante 211A ménagée à la première extrémité 21A du levier horizontal 21, de sorte que ledit premier goujon 210A peut à la fois coulisser et tourner dans la première gorge 211A en question. Le dispositif de transformation comporte également avantageusement un deuxième goujon 210B qui est en l'espèce solidaire de la pièce de transmission 20 et embarqué sur cette dernière. Ledit deuxième goujon 210B est avantageusement reçu dans une deuxième gorge complémentaire 211B ménagée à la deuxième extrémité 21B du levier horizontal 21, de façon que ledit deuxième goujon 210B puisse à la fois coulisser et pivoter dans la deuxième gorge 211B en question. Le levier horizontal 21 présente avantageusement une forme globale de faucille, avec un bras sensiblement rectiligne qui s'étend à partir de la première extrémité 21A jusqu'au point de rotation traversé par l'axe vertical excentré Z-Z', pour ensuite se prolonger par une portion arquée jusqu'à la deuxième extrémité 21B. Le déplacement en translation rectiligne de la pièce de transmission 20 dans le plan horizontal est converti en rotation du levier 21 autour de l'axe vertical excentré Z-Z', rotation qui est elle-même convertie en une rotation du couvercle 3 relativement au support 10 selon l'axe vertical central X-X'. L'invention n'est cependant absolument pas limitée à un tel mécanisme de transformation de mouvement et il est par exemple parfaitement envisageable de mettre alternativement en oeuvre un système à biellette, à came ou à engrenage, ou tout autre système connu. Avantageusement, et comme illustré aux figures, l'organe de commande 11 comprend une anse 11A destinée être actionnée manuellement afin de pouvoir être déplacée à la main par un utilisateur entre deux positions de butées, correspondant respectivement au verrouillage et au déverrouillage. Dans ce mode de réalisation préféré l'organe de commande 11 se présente donc sous la forme d'une pièce arquée, en forme de boucle, d'arche, avantageusement conçue pour pouvoir être saisie fermement, de préférence à pleine main, par un utilisateur. L'organe de commande 11 est avantageusement conçu pour que son déplacement manuel relativement au support 10 puisse s'effectuer selon soit un sens de verrouillage soit un sens de déverrouillage opposé. Avantageusement, comme illustré aux figures, l'organe de commande 11 est monté à pivotement relativement audit support 10 entre d'une part une position déployée (figure 1) correspondant au déverrouillage du couvercle 3 et dans laquelle ledit organe de commande 11 fait saillie verticalement, en l'espèce au droit du couvercle 3 vers l'extérieur, et d'autre part une position rétractée qui forme ladite position de verrouillage et dans laquelle ledit organe de commande 11 est rabaissé vers le couvercle 3. Dans sa position déployée, l'organe de commande 11 s'étend avantageusement selon une direction moyenne sensiblement parallèle audit axe vertical central X-X', tandis que dans sa position rétractée, il s'étend avantageusement selon une direction moyenne sensiblement perpendiculaire audit axe vertical central X-X', comme illustré aux figures.

Le fonctionnement de l'appareil de cuisson 1 illustré aux figures va maintenant être décrit brièvement. L'utilisateur remplit tout d'abord la cuve 2 illustrée à la figure 2 d'aliments à cuire, en positionnant éventuellement les aliments à distance du fond de la cuve 2, dans un panier de cuisson ajouré. L'utilisateur saisit ensuite le sous-ensemble de couvercle illustré à la figure 4 par l'anse 11A pour soulever ledit sous-ensemble de couvercle en vue de le rapporter sur la cuve 2 pour coiffer cette dernière afin de former une enceinte de cuisson étanche. Pour cela, l'utilisateur amène tout d'abord le sous-ensemble de couvercle au-dessus de la cuve 2, selon un positionnement relatif qui correspond au premier agencement prédéterminé illustré aux figures 11 à 13. Selon cet agencement, les bords tombants incurvés 10A, 10B du support 10 commencent à s'insérer partiellement dans les logements correspondant 20D, 20E, alors que le couvercle 3 est toujours maintenu manuellement au-dessus de la cuve 2 à l'encontre de son poids. Cette coopération des bords tombants verticaux 10A, 10B avec les logements correspondant 20D, 20E ménagés par les poignées 2D, 2E de la cuve 2 permet de positionner correctement le couvercle 3 relativement à la cuve 2 dans le plan horizontal, et de guider la trajectoire verticale du couvercle 3 relativement à la cuve 2 lorsque l'utilisateur continue ensuite à faire descendre le sous-ensemble de couvercle sur la cuve 2 pour venir coiffer cette dernière et atteindre ainsi le deuxième agencement de pré-verrouillage, dans lequel les nervures formant les deuxièmes éléments de positionnement 14, 15 viennent s'emboîter dans les encoches correspondantes formant les premiers éléments de positionnement 12, 13, ce qui verrouille ainsi le positionnement angulaire relatif du support 10 et de la cuve 2 dans un plan horizontal perpendiculaire à l'axe vertical central X-X'. L'appareil 1 se trouve alors dans une configuration d'attente de verrouillage, à partir de laquelle il est possible, par simple rotation du couvercle 3 relativement à la cuve 2, de verrouiller le couvercle 3 relativement la cuve 2. Pour cela l'utilisateur rabat l'anse 11A selon une course angulaire β d'environ 90°, jusqu'à atteindre une position rabattue de butée illustrée notamment aux figures 16 et 17. Ce déplacement manuel de l'anse 11A de sa position déployée à sa position rabattue entraîne concomitamment le pivotement du couvercle 3 relativement au support 10 d'un angle α d'environ 15°, permettant ainsi aux rampes de couvercle 7A-7J de venir en correspondance sous les rampes de cuve 8A-8J selon une configuration de verrouillage permettant la montée en pression. A l'issue du cycle de cuisson, et une fois la pression régnant au sein de l'enceinte retombée à un niveau prédéterminé de sécurité, l'utilisateur n'a plus qu'à relever l'anse 11A pour faire pivoter le couvercle 3 relativement au support 10 en sens inverse et désengager ainsi les rampes de cuve et de couvercle, permettant la séparation du couvercle 3 et de la cuve 2.

## Revendications

1. Appareil de cuisson (1) d'aliments sous pression comportant une cuve (2), un couvercle (3), ainsi qu'un système de verrouillage à baïonnette comprenant des première et deuxième séries d'excroissances (7A-7J, 8A-8J) de verrouillage solidaires respectivement du couvercle (3) et de la cuve (2), ledit appareil (1) comprenant un sous-ensemble de couvercle qui inclut ledit couvercle (3) ainsi qu'un support (10) attaché audit couvercle (3) de façon que ce dernier puisse pivoter relativement audit support (10), ledit appareil (1) étant **caractérisé en ce que** lesdits sous-ensemble de couvercle et cuve (2) sont conçus pour pouvoir être associés selon au moins un premier agencement conformément auquel le couvercle (3) surmonte la cuve (2) de sorte que ladite première série d'excroissances (7A-7J) se trouve sensiblement plus haut que ladite deuxième série d'excroissances (8A-8J) et un deuxième agencement obtenu à partir dudit premier agencement par un déplacement descendant dudit sous-ensemble de couvercle jusqu'à ce que ladite première série d'excroissances (7A-7J) se retrouve sensiblement plus bas que ladite deuxième série d'excroissances (8A-8J), lesdits support (10) et cuve (2) étant en outre respectivement pourvus de premier et deuxième éléments de guidage complémentaires (10', 10", 2', 2") conçus pour collaborer dès que lesdits sous-ensemble de couvercle et cuve (2) sont associés selon ledit premier agencement afin de guider ledit sous-ensemble de couvercle dans son déplacement descendant.

2. Appareil (1) selon la revendication 1 **caractérisé en ce que** ledit support (10) est attaché audit couvercle (3) de façon que ce dernier puisse pivoter relativement audit support (10) selon un axe vertical central, ledit déplacement descendant étant un déplacement en translation parallèlement audit axe vertical central (X-X').

3. Appareil (1) selon l'une des revendications 1 et 2 **caractérisé en ce que** ledit deuxième agencement autorise le pivotement du couvercle (3) relativement au support (10) pour amener ladite première série d'excroissances (7A-7J) sous ladite deuxième série d'excroissances (8A-8J) en correspondance de verrouillage.

4. Appareil (1) selon l'une des revendications 1 à 3 **caractérisé en ce que** ledit support (10) déborde radialement du couvercle (3) pour former ledit premier élément de guidage (10', 10").

5. Appareil (1) selon l'une des revendications 1 à 4 **caractérisé en ce que** ledit couvercle (3) inclut un élément de couverture discoïde (3A) ainsi qu'une ceinture annulaire (3B) qui s'étend entre un premier bord annulaire (30B) solidaire de l'élément de couverture discoïde (3A) et un second bord annulaire libre (31B), ladite cuve (2) étant localement entourée par le second bord annulaire libre lorsque lesdits sous-ensemble de couvercle et cuve sont associés selon ledit deuxième agencement, tandis que lorsque lesdits sous-ensemble de couvercle et cuve (2) sont associés selon ledit premier agencement ledit second bord annulaire libre (31B) se trouve plus haut que la cuve (2) et n'entoure de ce fait pas ladite cuve (2), ladite première série d'excroissances (7A-7J) étant de préférence portée par ladite ceinture annulaire (3B).

6. Appareil de cuisson (1) sous pression selon l'une des revendications 1 à 5 **caractérisé en ce que** ladite collaboration desdits premier et deuxième éléments de guidage (10', 10", 2', 2") pour guider ledit sous-ensemble de couvercle dans son déplacement descendant est une collaboration de type mâle/femelle, lesdits premier et deuxième éléments de guidage (10', 10", 2', 2") présentant de préférence respectivement une conformation mâle et une conformation femelle complémentaires.

7. Appareil (1) selon la revendication 6 **caractérisé en ce que** ladite conformation femelle forme un logement (20D, 20E) délimité par au moins un fond (20D', 20E') à partir duquel s'étend verticalement une paroi latérale (20D", 20E") entre un bord inférieur (201D", 201E") et un bord supérieur (202D", 202E"), ledit logement étant destiné à accueillir en son sein, par insertion verticale descendante, ladite conformation mâle qui de préférence s'étend verticalement entre un bord supérieur (10A', 10B') et un bord inférieur (10A", 10B").

8. Appareil (1) selon la revendication 7 **caractérisé en ce que** lorsque lesdits sous-ensemble de couvercle et cuve (2) sont associés selon ledit premier agencement, ladite conformation mâle est insérée dans ledit logement (20D, 20E) de façon que le bord inférieur (10A", 10B") de la conformation mâle se retrouve plus bas que le bord supérieur (202D", 202E") de ladite paroi latérale (20D", 20E") dudit logement (20D, 20E) et soit séparé verticalement du fond (20D', 20E') du logement (20D, 20E) par une première hauteur (H1), ledit appareil (1) étant également **caractérisé en ce que** lorsque lesdits sous-ensemble de couvercle et cuve (2) sont associés selon ledit deuxième agencement, ladite conformation mâle est insérée dans ledit logement (20D, 20E), de façon que le bord inférieur (10A", 10B") de la conformation mâle se retrouve plus bas que le bord supérieur (202D", 202E") de ladite paroi latérale (20D", 20E") dudit logement (20D, 20E) et soit séparé verticalement du fond (20D', 20E') par une deuxième hauteur inférieure (H2) à ladite première hauteur (H1).

9. Appareil de cuisson (1) sous pression selon l'une des revendications 1 à 8 **caractérisé en ce qu'**il comprend un premier élément de positionnement (12, 13) qui est porté par ledit support (10) et qui est conçu pour interagir mécaniquement, lorsque lesdits sous-ensemble de couvercle et cuve (2) sont associés selon ledit deuxième agencement, avec un deuxième élément de positionnement (14, 15) complémentaire porté par la cuve (2), pour verrouiller le positionnement angulaire relatif du support (10) et de la cuve (2) dans un plan horizontal, ledit premier élément de positionnement (12, 13) étant de préférence formé par une encoche ménagée dans ledit bord tombant vertical (10A, 10B), tandis que ledit deuxième élément de positionnement (14, 15) est de préférence formé par une nervure ménagée au sein du logement (20D, 20E).

10. Appareil (1) selon l'une des revendications 1 à 9 **caractérisé en ce que** ladite cuve (2) est munie d'une poignée (2D, 2E) qui porte ledit deuxième élément de guidage (2', 2").

11. Appareil de cuisson (1) selon l'une des revendications 1 à 10 **caractérisé en ce que** ledit sous-ensemble de couvercle inclut également un joint d'étanchéité porté par le couvercle et destiné à être interposé entre le couvercle (3) et la cuve (2), lesdits sous-ensemble de couvercle (3) et cuve (2) étant conçus pour que lorsqu'ils sont associés selon ledit deuxième agencement, ledit sous-ensemble de couvercle repose directement en appui contre la cuve (2) de façon à maintenir un écartement vertical (H2) entre lesdits premier et deuxième éléments de guidage (10', 10", 2', 2"), de sorte que ledit premier élément de guidage (10', 10") n'exerce pas d'appui vertical sur ledit deuxième élément de guidage (2', 2").

12. Appareil de cuisson (1) d'aliments sous pression selon l'une des revendications 1 à 11 **caractérisé en ce qu'**il comprend un organe de commande (11) du système de verrouillage à baïonnette conçu pour pouvoir être déplacé manuellement relativement au support (10), ledit appareil (1) comprenant un dispositif de transformation dudit déplacement manuel de l'organe de commande (11) en pivotement du couvercle (3) relativement au support (10).

13. Appareil de cuisson (1) d'aliments sous pression selon les revendications 2 et 12 **caractérisé en ce que** ledit organe de commande (11) est monté à pivotement relativement audit support (10) selon un axe radial de pivotement (Y-Y') qui est perpendiculaire audit axe vertical central (X-X').

14. Appareil de cuisson (1) d'aliments sous pression selon l'une des revendications 1 à 13 **caractérisé en ce que** ledit sous-ensemble de couvercle est indépendant de la cuve (2) de sorte qu'il peut être librement manipulé et déplacé indépendamment de la cuve (2).

15. Appareil de cuisson (1) d'aliments sous pression selon l'une des revendications 1 à 14 **caractérisé en ce qu'**il est conçu pour être soumis à une source de chauffe externe, comme par exemple une plaque de cuisson.

## Patentansprüche

1. Druckkochtopf (1) für Nahrungsmittel, umfassend eine Wanne (2), einen Deckel (3) sowie ein Bajonett-Verriegelungssystem, umfassend erste und zwei Reihen von Ausstülpungen (7A-7J, 8A-8J) zur Verriegelung, die mit dem Deckel (3) bzw. der Wanne (2) verbunden sind, wobei der Kochtopf (1) eine Deckeluntereinheit umfasst, die den Deckel (3) einschließt, sowie eine Halterung (10), die am Deckel (3) befestigt ist, so dass dieser letztgenannte in Bezug zur Halterung (10) schwenken kann, wobei der Kochtopf (1) **dadurch gekennzeichnet ist, dass** die Deckeluntereinheit und Wanne (2) ausgebildet sind, um gemäß mindestens einer ersten Anordnung zusammengefügt werden zu können, bei der der Deckel (3) auf der Wanne (2) montiert ist, so dass die erste Reihe von Ausstülpungen (7A-7J) im Wesentlichen höher angeordnet ist als die zweite Reihe von Ausstülpungen (8A-8J), und gemäß einer zweiten Anordnung, die aus der ersten Anordnung durch ein Verschieben der Deckeluntereinheit nach unten erhalten wird, bis sich die erste Reihe von Ausstülpungen (7A-7J) wieder im Wesentlichen weiter unten als die zweite Reihe von Ausstülpungen (8A-8J) befindet, wobei die Halterung (10) und die Wanne (2) ferner mit einem ersten bzw. einem zweiten komplementären Führungselement (10', 10", 2', 2") versehen sind, die ausgebildet sind, um zusammenzuwirken, sobald die Deckeluntereinheit und Wanne (2) gemäß der ersten Anordnung zusammengefügt sind, um die Deckeluntereinheit in ihre Verschiebung nach unten zu führen.

2. Kochtopf (1) nach Anspruch 1, **dadurch gekennzeichnet, dass** die Halterung (10) an dem Deckel (3) derart befestigt ist, dass dieser letztgenannte in Bezug zur Halterung (10) entlang einer vertikalen Zentralachse schwenken kann, wobei die Verschiebung nach unten eine Verschiebung in Translation parallel zur vertikalen Zentralachse (X-X') ist.

3. Kochtopf (1) nach einem der Ansprüche 1 und 2, **dadurch gekennzeichnet, dass** die zweite Anordnung das Schwenken des Deckels (3) in Bezug zur Halterung (10) gestattet, um die erste Reihe von Ausstülpungen (7A-7J) unter die zweite Reihe von Ausstülpungen (8A-8J) in Übereinstimmung mit Verriegelung zu bringen.

4. Kochtopf (1) nach einem der Ansprüche 1 bis 3, **dadurch gekennzeichnet, dass** die Halterung (10) radial über den Deckel (3) übersteht, um das erste Führungselement (10', 10") zu bilden.

5. Kochtopf (1) nach einem der Ansprüche 1 bis 4, **dadurch gekennzeichnet, dass** der Deckel (3) ein scheibenförmiges Abdeckelement (3A) sowie einen Ringbügel(3B) enthält, der sich zwischen einem ersten ringförmigen Rand (30B), der mit dem scheibenförmigen Abdeckelement (3A) verbunden ist, und einem zweiten freien ringförmigen Rand (31B) erstreckt, wobei die Wanne (2) lokal von dem zweiten freien ringförmigen Rand umgeben ist, wenn die Deckeluntereinheit und Wanne gemäß der zweiten Anordnung zusammengefügt sind, während, wenn die Deckeluntereinheit und Wanne (2) gemäß der ersten Anordnung zusammengefügt sind, der zweite freie ringförmige Rand (31B) höher als die Wanne (2) angeordnet ist und aus diesem Grund die Wanne (2) nicht umgibt, wobei die erste Reihe von Ausstülpungen (7A-7J) vorzugsweise von dem Ringbügel(3B) getragen wird.

6. Druckkochtopf (1) nach einem der Ansprüche 1 bis 5, **dadurch gekennzeichnet, dass** das Zusammenwirken der ersten und zweiten Führungselemente (10', 10", 2', 2"), um die Deckeluntereinheit in ihre Verschiebung nach unten zu führen, ein Zusammenwirken vom Typ männlich/weiblich ist, wobei die ersten und zweiten Führungselemente (10', 10", 2', 2") vorzugsweise jeweils eine komplementäre männliche Ausführung und weibliche Ausführung aufweisen.

7. Kochtopf (1) nach Anspruch 6, **dadurch gekennzeichnet, dass** die weibliche Ausführung eine Aufnahme (20D, 20E) bildet, die durch mindestens einen Boden (20D', 20E') begrenzt ist, von dem sich vertikal eine Seitenwand (20D", 20E") zwischen einem unteren Rand (201D", 201E") und einem oberen Rand (202D", 202E") erstreckt, wobei die Aufnahme dazu bestimmt ist, in ihrer Mitte durch vertikales Einsetzen nach unten die männliche Ausführung aufzunehmen, die sich vorzugsweise vertikal zwischen einem oberen Rand (10A', 10B') und einem unteren Rand (10A", 10B") erstreckt.

8. Kochtopf (1) nach Anspruch 7, **dadurch gekennzeichnet, dass**, wenn die Deckeluntereinheit und Wanne (2) gemäß der ersten Anordnung zusammengefügt sind, die männliche Ausführung in die Aufnahme (20D, 20E) derart eingesetzt ist, dass der untere Rand (10A", 10B") der männlichen Ausführung weiter unten als der obere Rand (202D", 202E") der Seitenwand (20D", 20E") der Aufnahme (20D, 20E) angeordnet und vertikal von dem Boden (20D', 20E') der Aufnahme (20D, 20E) durch eine erste Höhe (H1) getrennt ist, wobei der Kochtopf (1) auch **dadurch gekennzeichnet ist, dass**, wenn die Deckeluntereinheit und Wanne (2) gemäß der zweiten Anordnung zusammengefügt sind, die männliche Ausführung in die Aufnahme (20D, 20E) derart eingesetzt ist, dass der untere Rand (10A", 10B") der männlichen Ausführung weiter unten als der obere Rand (202D", 202E") der Seitenwand (20D", 20E") der Aufnahme (20D, 20E) angeordnet und vertikal von dem Boden (20D', 20E') durch eine zweite Höhe (H2), die kleiner als die erste Höhe (H1) ist, getrennt ist.

9. Druckkochtopf (1) nach einem der Ansprüche 1 bis 8, **dadurch gekennzeichnet, dass** er ein erstes Positionierungselement (12, 13) umfasst, das von der Halterung (10) getragen wird und ausgebildet ist, um mechanisch, wenn die Deckeluntereinheit und Wanne (2) gemäß der zweiten Anordnung zusammengefügt sind, mit einem zweiten komplementären Positionierungselement (14, 15) zusammenzuwirken, das von der Wanne (2) getragen wird, um die relative Winkelpositionierung der Halterung (10) und der Wanne (2) in einer Horizontalebene zu verriegeln, wobei das erste Positionierungselement (12, 13) vorzugsweise von einer Kerbe gebildet ist, die in dem vertikalen Saumrand (10A, 10B) ausgebildet ist, während das zweite Positionierungselement (14, 15) vorzugsweise von einer Rippe gebildet ist, die in der Aufnahme (20D, 20E) ausgebildet ist.

10. Kochtopf (1) nach einem der Ansprüche 1 bis 9, **dadurch gekennzeichnet, dass** die Wanne (2) mit einem Griff (2D, 2E) versehen ist, der das zweite Führungselement (2', 2") trägt.

11. Kochtopf (1) nach einem der Ansprüche 1 bis 10, **dadurch gekennzeichnet, dass** die Deckeluntereinheit ferner eine Dichtung einschließt, die von dem Deckel getragen wird und dazu bestimmt ist, zwischen dem Deckel (3) und der Wanne (2) angeordnet zu sein, wobei die Deckeluntereinheit (3) und Wanne (2) so ausgebildet sind, dass, wenn sie gemäß der zweiten Anordnung zusammengefügt werden, die Deckeluntereinheit direkt an der Wanne (2) anliegt, um einen vertikalen Abstand (H2) zwischen den ersten und zweiten Führungselementen (10', 10", 2', 2") zu halten, so dass das erste Führungselement (10', 10") keinen vertikalen Druck auf das zweite Führungselement (2', 2") ausübt.

12. Druckkochtopf (1) für Nahrungsmittel nach einem der Ansprüche 1 bis 11, **dadurch gekennzeichnet, dass** er ein Steuerelement (11) des Bajonettverschlusses umfasst, das derart ausgebildet ist, dass es manuell in Bezug zur Halterung (10) verschoben werden kann, wobei der Kochtopf (1) eine Vorrichtung zur Umformung der manuellen Verschiebung des Steuerelements (11) in ein Schwenken des Deckels (3) in Bezug zur Halterung (10) umfasst.

13. Druckkochtopf (1) von Nahrungsmitteln nach den Ansprüchen 2 und 12, **dadurch gekennzeichnet, dass** das Steuerelement (11) schwenkbar in Bezug zur Halterung (10) entlang einer radialen Schwenkachse (Y-Y'), die senkrecht zur vertikalen Zentralachse (X-X') ist, montiert ist.

14. Druckkochtopf (1) von Nahrungsmitteln nach einem der Ansprüche 1 bis 13, **dadurch gekennzeichnet, dass** die Deckeluntereinheit von der Wanne (2) unabhängig ist, so dass sie frei betätigt und unabhängig von der Wanne (2) verschoben werden kann.

15. Druckkochtopf (1) von Nahrungsmitteln nach einem der Ansprüche 1 bis 14, **dadurch gekennzeichnet, dass** er derart ausgebildet ist, dass er einer externen Heizquelle, wie beispielsweise einer Kochplatte, ausgesetzt wird.

## Claims

1. A cooking utensil (1) for cooking food under pressure having a vessel (2), a lid (3), and a bayonet-fitting locking system comprising first and second series of locking projections (7A-7J, 8A-8J) integral respectively with the lid (3) and with the vessel (2), said utensil (1) including a lid subassembly that includes said lid (3) and a support (10) attached to said lid (3) in such a manner that said lid can pivot relative to said support (10), said utensil (1) being **characterized in that** said lid subassembly and said vessel (2) are designed to be capable of being associated with each other in at least a first arrangement in which the lid (3) overlies the vessel (2) so that said first series of projections (7A-7J) are significantly higher than said second series of projections (8A-8J), and a second arrangement obtained from said first arrangement by moving said lid subassembly downwards until said first series of projections (7A-7J) are significantly lower than said second series of projections (8A-8J), said support (10) and said vessel (2) also being provided respectively with complementary first and second guide elements (10', 10", 2', 2") that are designed to co-operate mutually whenever said lid subassembly and said vessel (2) are associated with each other in said first arrangement in order to guide said lid subassembly as it moves downwards.

2. A utensil (1) according to claim 1, **characterized in that** said support (10) is attached to said lid (3) in such a manner that said lid can pivot relative to said support (10) about a central vertical axis, said downward movement being a movement in translation parallel to said central vertical axis (X-X').

3. A utensil (1) according to any one of claims 1 to 2, **characterized in that** said second arrangement thus allows the lid (3) to pivot relative to the support (10) to bring said first series of projections (7A-7J) under said second series of projections (8A-8J) into locking correspondence.

4. A utensil (1) according to any one of claims 1 to 3, **characterized in that** said support (10) extends radially beyond the lid (3) to form said first guide element (10', 10").

5. A utensil (1) according to any one of claims 1 to 4, **characterized in that** said lid (3) includes a disk-shaped lid element (3A) and an annular band (3B) that extends between a first annular edge (30B) integral with the disk-shaped lid element (3A) and a free second annular edge (31B), said vessel (2) being locally surrounded by the free second annular edge when said lid subassembly and said vessel are associated with each other in said second arrangement, while, when said lid subassembly and said vessel (2) are associated with each other in said first arrangement, said free second annular edge (31B) is higher than the vessel (2) and therefore does not surround said vessel (2), said first series of projections (7A-7J) being preferably carried by said annular band (3B).

6. A pressure-cooking utensil (1) according to any one of claims 1 to 5, **characterized in that** said co-operation between said first and second guide elements (10', 10", 2', 2") for guiding said lid subassembly as it moves downwards is co-operation of the male/female type, said first and second guide elements (10', 10", 2', 2") preferably having respectively a male shaped portion and a female shaped portion that are complementary to each other.

7. A utensil (1) according to claim 6, **characterized in that** said female shaped portion forms a recess (20D, 20E) defined by at least a bottom (20D', 20E') from which a side wall (20D", 20E") extends vertically between a bottom edge (201D", 201E") and a top edge (202D", 202E"), said recess being designed to receive in it, by downward vertical insertion, said male shaped portion, which preferably extends vertically between a top edge (10A', 10B') and a bottom edge (10A", 10B").

8. A utensil (1) according to claim 7, **characterized in that**, when said lid subassembly and said vessel (2) are associated with each other in said first arrangement, said male shaped portion is inserted into said recess (20D, 20E) in such a manner that the bottom edge (10A", 10B") of the male shaped portion is lower than the top edge (202D", 202E") of said side wall (20D", 20E") of said recess (20D, 20E) and is separated vertically from the bottom (20D', 20E') of the recess (20D, 20E) by a first height (H1), said utensil (1) being further **characterized in that**, when said lid subassembly and said vessel (2) are associated with each other in said second arrangement, said male shaped portion is inserted in said recess (20D, 20E), in such a manner that the bottom edge (10A", 10B") of the male shaped portion is lower than the top edge (202D", 202E") of said side wall (20D", 20E") of said recess (20D, 20E) and is separated vertically from the bottom (20D', 20E') by a second height (H2) less than said first height (H1).

9. A pressure-cooking utensil (1) according to any one of claims 1 to 8, **characterized in that** it comprises a first positioning element (12, 13) that is carried by said support (10) and that is designed to interact mechanically with a complementary second positioning element (14, 15) carried by the vessel (2), when said lid subassembly and said vessel (2) are associated with each other in said second arrangement, so as to lock the relative angular positioning of the support (10) and of the vessel (2) in a horizontal plane, said first positioning element (12, 13) being preferably formed by a notch provided in said vertical dropped edge (10A, 10B), while said second positioning element (14, 15) is preferably formed by a rib provided in the recess (20D, 20E).

10. A utensil (1) according to any one of claims 1 to 9, **characterized in that** said vessel (2) is provided with a handle (2D, 2E) that carries said second guide element (2', 2").

11. A cooking utensil (1) according to any one of claims 1 to 10, **characterized in that** said lid subassembly also includes a sealing gasket carried by the lid and designed to be interposed between the lid (3) and the vessel (2), said lid subassembly (3) and said vessel (2) being designed so that, when they are associated with each other in said second arrangement, said lid subassembly rests and bears directly against the vessel (2) in such a manner as to maintain a vertical spacing (H2) between said first and second guide elements (10', 10", 2', 2"), so that said first guide element (10', 10") does not bear vertically on said second guide element (2', 2").

12. A cooking utensil (1) for cooking food under pressure according to any one of claims 1 to 11, **characterized in that** it includes a control member (11) for controlling the bayonet-fitting locking system, which control member is designed to be capable of being moved manually relative to the support (10), said utensil (1) including a transformation device for transforming said manual movement of the control member (11) into pivoting of the lid (3) relative to the support (10).

13. A cooking utensil (1) for cooking food under pressure according to claims 2 and 12, **characterized in that** said control member (11) is mounted to pivot relative to said support (10) about a radial axis of pivoting (Y-Y') that is perpendicular to said central vertical axis (X-X').

14. A cooking utensil (1) for cooking food under pressure according to any one of claims 1 to 13, **characterized in that** said lid subassembly is independent of the vessel (2) so that it can be freely manipulated and moved independently of the vessel (2).

15. A cooking utensil (1) for cooking food under pressure according to any one of claims 1 to 14, **characterized in that** it is designed to be subjected to an external heat source, such as, for example, a hotplate or ring.
